(19) Europäisches Patentamt

European Patent Office

Office européen des brevets

(11) EP 1 808 765 B1

(12) **EUROPEAN PATENT SPECIFICATION**

(45) Date of publication and mention
of the grant of the patent:
**08.02.2017 Bulletin 2017/06**

(51) Int Cl.:
***G06F 9/445*** *(2006.01)*

(21) Application number: **06026292.0**

(22) Date of filing: **19.12.2006**

(54) **Initializing apparatus of microcomputer and control apparatus for a vehicle**

Initialisierungsvorrichtung eines Mikrocomputers und Steuervorrichtung für ein Fahrzeug

Dispositif d'initianilisation d'un ordinateur et dispositif de contrôle d'un véhicule

(84) Designated Contracting States:
**DE FR**

(30) Priority: **20.12.2005 JP 2005366598**

(43) Date of publication of application:
**18.07.2007 Bulletin 2007/29**

(73) Proprietor: **HITACHI, LTD.**
**Chiyoda-ku**
**Tokyo 100-8280 (JP)**

(72) Inventors:
• **Miyake, Junji**
**Chiyoda-ku**
**Tokyo 100-8220 (JP)**

• **Hiratsuka, Masayoshi**
**c/o Hitachi Engi. & Services Co., Ltd.**
**Hitachi-shi**
**Ibaraki-ken (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
**EP-A- 0 472 386       US-A1- 2004 030 824**
**US-A1- 2004 236 934   US-A1- 2005 149 713**

**Description**

BACKGROUND OF THE INVENTION

The present invention is related to an initializing apparatus of an embedded type microcomputer, and also related to a control apparatus for a vehicle, which is arranged by employing the embedded type microcomputer.

As to embedded type microcomputers, while a large number of peripheral device functions have been previously installed in these microcomputers so as to be supplied from semiconductor manufactures, users changes peripheral function of relevant appliances by way of software in order to be fitted to structures of these relevant appliances, so that these changed peripheral function may be utilized for the microcomputers by the users.

Normally, an execution of changing peripheral function as to a microcomputer by means of software is referred to as an "initialization of the microcomputer". This initializing operation contains an operation for changing operation modes (operating frequency, bus width, wait time, interrupt priority degree etc.) of the microcomputer itself, and another operation for changing initial characteristics/operation modes of peripheral devices which are connected via buses to a CPU core of this microcomputer.

As sorts of these peripheral devices, there are general-purpose timer units, A/D converters, D/A converters, I/O ports, DMA controllers, communication controllers, and the like, which are connected to an internal bus.

Normally, various operations may be carried out by a CPU of a microcomputers, namely, which peripheral circuit device among these peripheral devices may be operated/not operated in connection with an actual assembled hardware structure, and also, which operating mode may be selected from functions of peripheral devices which are operated. Concretely speaking, these operations may be realized by that a predetermined value is written in a register specific to a peripheral device which is address-mapped on the internal bus.

In the normal operation, an initializing operation of a microcomputer is accomplished before an operating system (OS) is initiated, and then, an application program of a user starts to run.

However, as an implementation type of a program, this program is usually merged with either an operating system or an application program, and then, the merged program is normally stored into a ROM (read-only memory).

With respect to microcomputers which are assembled in on-vehicle type control appliances, in the case that a new on-vehicle type control appliance is developed and/or an on-vehicle type control appliance is remodeled, the following changing actions of these microcomputers are mostly carried out. That is, the microcomputers which have been conventionally used are changed into same series and other sorts (normally, combinations of ROM/RAM capacities and peripheral devices are changed) of microcomputers supplied by the same semiconductor manufactures. Moreover, in an extreme case, there are some possibilities that these conventionally used microcomputers are changed into different microcomputers which are supplied from completely different semiconductor manufactures.

In such a case, initializing programs corresponding to new microcomputers are strongly required to be newly developed.

As one of technical ideas capable of improving productivity, maintenance characteristics, and porting characteristics of program development for changing such microcomputers, the following technical ideas are known (refer to, for instance, JP-A-2003-308307): That is, while a code for performing an initializing operation of a microcomputer is separated from a normal application program, this code is previously stored in an exclusively used initiation-purpose ROM.

Also, as another known technical example, the below-mentioned technical ideas are proposed (refer to, for example, JP-A-2004-362448): That is, while a shared data table is owned in which variables for controlling hardware are defined as to plural sorts of microcomputers respectively, identification information as to the relevant microcomputer is read from an external source, and then, hardware is controlled by employing such a "relationship between variable and address" selected from the shared data table. It is predictable that the above-explained shared data table may correspond to such a table for solving a corresponding relationship between addresses and variable names.

Document US 2004/0236934 A1 discloses a pre-boot process, wherein a differentiate definition block ("DDB") contains information about hardware implementation and configuration details in the form of data and control methods. During a pre-boot process, the DDB is loaded into a memory area, is interpreted by the CPU and causes the CPU to execute a sequence of an initializing process operation.

SUMMARY OF THE INVENTION

The invention is as set out in the independent claims.

As previously explained, it is a subject point how to manufacture programs for handing initializing operations of microcomputers when model sorts of these microcomputers are changed, while both reliability and maintenance characteristics thereof may be improved.

The known technical idea of JP-A-2003-308307 is related to such an idea that while the exclusively-used initiation-purpose ROM is provided so as to store thereinto the initializing routine, this initiating program is managed in the separate manner with respect to the user program by pairing the main body of the microcomputer and the initiation-purpose ROM. However, when this system is conducted, the function is newly added in the microcomputer, namely the initiation-purpose ROM is newly added, there is no way to avoid a cost increase of the microcomputer itself.

Also, since the initializing program is separated from the application program of the user, the respective programs can be independently formed and verified. This may expect such a merit that the reliability may be improved.

However, another effect as to the developing efficiency and the productivity cannot be expected. This reason is given as follows: That is, this system merely separate the originally merged software to be stored in the separate manner, and therefore, there is no change in a total number of man-hours required for producing the programs.

In addition, in such a case that software close to a hardware boundary, for example, there are different developers who are involved in the development of device drivers, a large problem would be expected. When the plurality of developers are involved, normally, the initializing routines are individually developed in a parallel manner for each of the peripheral devices. As a consequence, such a cumbersome work is required that the initializing routines which have been individually developed are unified in the post stage, and then, the unified initializing routine is stored in the initiation-purpose ROM.

Also, there is another large problem in a unit testing and verification for device drivers. Even when a specific device driver has already been completed and is wanted to be verified, since initializing routines of other device drivers are not yet completed, the initiation-purpose ROM cannot be arranged. Therefore, there is such a difficulty that the unit testing and verification of the routine cannot be carried out.

As a result, such a manufacturing stage shortening work that a plurality of device drivers are formed, and at the same time, a unit testing and verification is carried out in a parallel manner can be hardly performed.

The known technical idea of JP-A-2004-362448 is to have the shared data table which has stored therein the plural sorts of variable definitions. However, although this conventional system owns a large merit, a demerit is also owned.

This reason is given as follows: If the sorts of relevant microcomputers are increased, then the size of the shared data table is increased. Since the used data is increased, the memory efficiency of the ROM may be lowered.

Also, in such a case that a description as to a specific sort of microcomputer contains an error, the following management problem occurs. That is, only the shared data table for the relevant microcomputer sort is corrected, or since the shared data table is commonly utilized for the respective computer sorts, it is practically difficult to judge that the shared data table for other microcomputer sorts is also corrected within one time.

Also, in this known technical idea, the "relation-ship between variables and addresses" selected from the shared data table is changed for each of the microcomputer sorts, the hardware can be controlled without changing the application program.

However, it is difficult to apply this system to the initializing program. This reason is given as follows: That is, when the sort of microcomputer is changed, the address of the setting register is apparently changed, and further, the meaning of this content, the structure of the bit position, and the data size are changed under normal condition. As a consequence, the structure itself of the program cannot be changed by merely changing the address, which never constitutes a realistic solution.

Also, such an operation that the structure itself of the program is not changed implies that the hardware is basically operated by a dynamic link (indirect referring system via variable) via a pointer. This indirect referring system owns a demerit in view of an execution speed of an instruction and software reliability, as compared with a method for installing an instruction word formed by statistically solving an address in advance by a compiler for this microcomputer (direct referring system).

As previously described, a sequence as to process operations after the resetting operation of the microcomputer is released is defined by an initializing program, an operating system (OS), and an application program in this order. As a consequence, in order to quickly initiating the operating system after the reset releasing operation, the process operation of the initializing program must be short. If not so, then a very serious problem may be induced in the response characteristic as to the on-vehicle control apparatus. Thus, the above-explained conventional technical idea which may lower the process speed is not proper to the initializing process operation in view of this point.

The present invention has been made to solve the above-described problems, and therefore, has an object to provide an initializing apparatus of a microcomputer and also an on-vehicle control apparatus which has assembled this microcomputer, capable of improving productivity and reliability as to forming of an initializing program of a microcomputer, while a developing efficiency thereof is improved, as compared with that of the conventional technical ideas.

To achieve the above-described object, an initializing apparatus of a microcomputer, according to an aspect of the present invention, is featured by such an initializing apparatus of a microcomputer equipped with a CPU and a ROM for storing thereinto a program executed by the CPU, in which while an initializing program is executed after a reset signal of the microcomputer is released and before an operating system is initiated, the initializing program executes a process operation for setting/changing a structure of the CPU itself and an operation mode of the CPU, or a process operation for setting/changing a structure and an operation mode of a peripheral device connected via a bus to the CPU; wherein: an installation mode of the initializing program on the ROM is separated into a first area and at least one, or more pieces of second areas to be constructed; the first area stores thereinto an instruction code which can be directly executed by the CPU; the second area stores thereinto data which cannot be directly executed by the CPU; and the first area is arranged by containing an interpret routine which sequentially reads out the content of second area and causes the CPU to execute a sequence of the initializing process operation.

The initializing apparatus of the microcomputer, according to the present invention, is preferably arranged by that the second area is arranged in such a manner that a user can set the second area.

The initializing apparatus of the microcomputer, according to the present invention, is preferably arranged by that the first area owns a function for selecting a predetermined combination from data belonging to the second area in accordance with a logic input value of a port, which is inputted outside the microcomputer.

The initializing apparatus of the microcomputer, according to the present invention, is preferably arranged by that the first area has a function for selecting a predetermined combination from data belonging to the second area in accordance with a data content of a third area 601 which is different from both the first area and the second area and has been stored in the ROM.

The initializing apparatus of the microcomputer, according to the present invention, is preferably arranged by that the second area is arranged by either a list or data having a table format in the ROM.

The initializing apparatus of the microcomputer, according to the present invention, is preferably arranged by that the second area is arranged by either the list or the data having the table format in the ROM; and the data is applied from being converted from such a data which is supplied outside the microcomputer, and is described in a CSV format, or a markup language format such as an XML.

The initializing apparatus of the microcomputer, according to the present invention, is preferably arranged by that while the second area is arranged by either the list or the table formatted data within the ROM, the second area contains at least attributes as one element of the operation sequence expressed by the data, said attributes corresponding to a predetermined address, a predetermined data size, a predetermined bit mask value, and an initial value related to a specific storage area designated by these attributes; the second area expresses a data transfer operation having a predetermined bit width related to the storage area designated by the attributes; and the attributes are stored based upon a rule which can be searched by an interpret routine of the first area in accordance with a predetermined offset address from either a predetermined row or a head of each of columns.

The initializing apparatus of the microcomputer, according to the present invention, is preferably arranged by that while the second area is arranged by either the list or the table formatted data within the ROM, the second area contains at least attributes as one element of the operation sequence expressed by the data, the attributes corresponding to a predetermined address, and a predetermined data size; the second area expresses a dummy read related to the storage area designated by the attributes; and the attributes are stored based upon a rule which can be searched by an interpret routine of the first area in accordance with a predetermined offset address from either a predetermined row or a head of each of columns.

The initializing apparatus of the microcomputer, according to the present invention, is preferably arranged by that while the second area is arranged by either the list or the table formatted data within the ROM, the second area contains at least attributes as one element of the operation sequence expressed by the data, the attributes corresponding to a predetermined address, a predetermined bit position, and a predetermined logic value; the second area expresses a waiting operation until a relevant bit of a storage area designated by the attributes becomes a predetermined logic value; and the attributes are stored based upon a rule which can be searched by an interpret routine of the first area in accordance with a predetermined offset address from either a predetermined row or a head of each of columns.

The initializing apparatus of the microcomputer, according to the present invention, is preferably arranged by that while the second area is arranged by either the list or the table formatted data within the ROM, the second area contains at least an attributes of a predetermined waiting time as one element of the operation sequence expressed by the data, the second area expresses a waiting operation of a time designated by the attribute; and the attribute is stored based upon a rule which can be searched by an interpret routine of the first area in accordance with a predetermined offset address from either a predetermined row or a head of each of columns.

The initializing apparatus of the microcomputer, according to the present invention, is preferably arranged by that while the second area is arranged by either the list or the table formatted data within the ROM, the second area contains at least an attribute of a pointer to a predetermined function as one element of the operation sequence expressed by the data, the second area expresses a function call to a function designated by the attribute; and the attribute is stored based upon a rule which can be searched by an interpret routine of the first area 201 in accordance with a predetermined offset address from either a predetermined row or a head of each of columns.

Also, in order to achieve the above-explained object of the present invention, an on-vehicle control apparatus, according to another aspect of the present invention, is featured by comprising: a microcomputer for storing thereinto the above-described initializing apparatus.

Further, in order to achieve the above-described object, an initializing program of a microcomputer, according to a further aspect of the present invention, is featured by such an initializing program executed by a microcomputer equipped with a CPU and a ROM for storing thereinto a program executed by the CPU, in which while the initializing program is executed after a reset signal of the microcomputer is released and before an operating system is initiated, the initializing program executes a process operation for setting/changing a structure of the CPU itself and an operation mode of the CPU, or a process operation for setting/changing a structure and an operation mode of a peripheral device connected via a bus to the CPU; wherein: the initializing program is separated into a first area and at least one, or more pieces of second areas to be constructed; the first area stores thereinto an instruction code which can be directly executed by the CPU; the second area stores thereinto data which cannot be directly executed by the CPU; and the first area is arranged by containing an interpret routine which sequentially reads out the content of the second area and causes the CPU to execute a sequence of the initializing process operation.

In accordance with the present invention, it is possible to provide the initializing apparatus of the microcomputer, having a superior developing efficiency when the initializing apparatus is formed, and a superior management efficiency during maintenance. When the sort of the microcomputer is changed, the initializing sequence capable of immediately accepting this sort change can be formed. As a result, there is an advantage that the developing cost in the software developing work can be reduced.

Also, since the microcomputer equipped with the above-explained initializing apparatus is assembled in the on-vehicle control apparatus, there is another merit that the reliability as to the operation of this on-vehicle control apparatus can be improved.

Other objects, features and advantages of the invention will become apparent from the following description of the embodiments of the invention taken in conjunction with the accompanying drawings.

BRIEF DESCRIPTION OF THE DRAWINGS

Fig. 1 is a block diagram for schematically showing an internal structure of a microcomputer according to an embodiment, to which an initializing apparatus according to the present invention is applied.

Fig. 2 is a block diagram for schematically indicating an arranging example of and operations of the microcomputer on a ROM, to which the initializing apparatus according to the present invention is applied.

Fig. 3 is an explanatory diagram for explaining a supporting mode by an external tool, and a forming work of an initializing table, which are related to the initializing apparatus of the microcomputer according to the present invention.

Fig. 4 is a block diagram for exemplifying an embodiment in which initializing tables are separated from each other for every peripheral device.

Fig. 5 is a block diagram for illustratively explaining an embodiment in which an initializing table is selected from a plurality of initializing tables based upon an external port.

Fig. 6 is a block diagram for illustratively explaining an embodiment in which an initializing table is selected from a plurality of initializing tables based upon user data.

Fig. 7A and Fig. 7B are diagrams for exemplifying instruction systems which constitute initializing tables.

Fig. 8 is a diagram for exemplifying one embodiment of the instruction system which is described by employing an XML (extensible markup language).

Fig. 9 is a flow chart for describing a summary of an entire interpreting operation executed in the initializing apparatus of the microcomputer according to the present invention.

Fig. 10 is a flow chart for explaining a transfer processing operation as one of initializing instructions in the initializing apparatus of the microcomputer according to the present invention.

Fig. 11 is a flow chart for explaining a dummy read processing operation as one of the initializing instructions in the initializing apparatus of the microcomputer according to the present invention.

Fig. 12 is a flow chart for explaining a flag change waiting process operation as one of the initializing instructions in the initializing apparatus of the microcomputer according to the present invention.

Fig. 13 is a flow chart for explaining a time waiting process operation as one of the initializing instructions in the initializing apparatus of the microcomputer according to the present invention.

Fig. 14 is a flow chart for explaining an external function call processing operation as one of the initializing instructions in the initializing apparatus of the microcomputer according to the present invention.

DESCRIPTION OF THE EMBODIMENTS

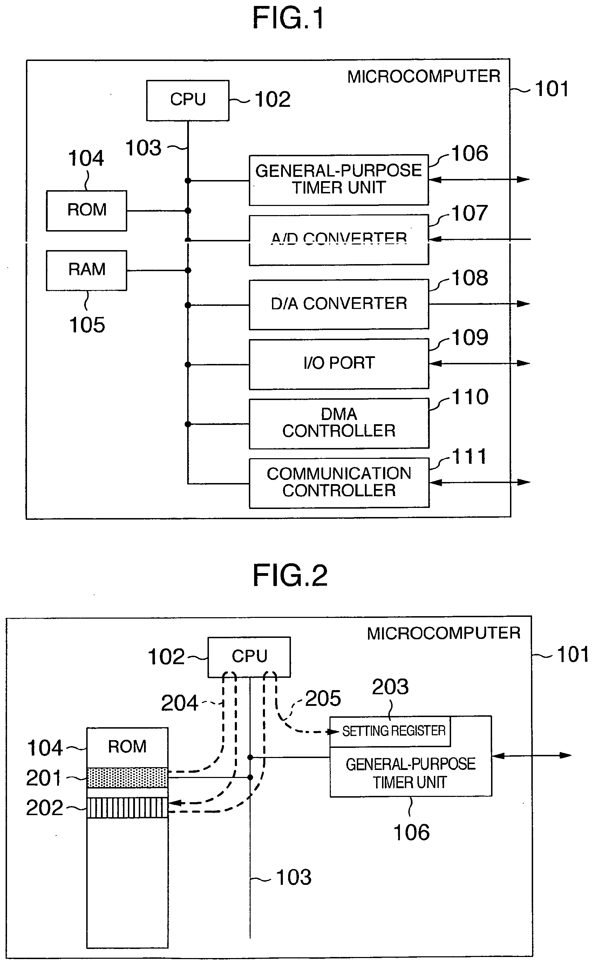

Referring now to Fig. 1 to Fig. 14, a description is made of various embodiments in the case that an initializing apparatus of a microcomputer according to the present invention is applied to an on-vehicle control apparatus.

Fig. 1 represents an internal structure of the microcomputer 101 as a block diagram. The microcomputer 101 is equipped with a CPU (central processing unit) 102, a ROM (read-only memory) 104, a RAM (random access memory) 105, and as peripheral devices, a general-purpose timer unit 106, an A/D converter 107, a D/A converter 108, an I/O port 109, a DMA (direct memory access) controller 110, and a communication controller 111, which are connected to the CPU 102 by an internal bus 103.

Normally, "initialization of microcomputer" implies any of initial setting operations which constitute an operation precondition of application programs which have been installed in the ROM 104. Such initial setting operations are carried out by an initializing program, while this initializing program has been similarly installed in the ROM 104.

The application program and the initializing program are different in their initiation timing from each other. Normally, the application program is initiated in a periodic manner at predetermined timing by an operating system (this OS is also installed in this ROM 104), whereas the initializing program is called before this operating system is initiated, and defines an operation precondition of a system which contains the operating system and the application program.

As a consequence, the above-described initializing program is subsequently executed after a resetting operation of the microcomputer has been released, and thereafter, the operating system (OS) is initiated, and the application program of the user is executed in this order.

Also, running of the initializing program has been completely accomplished in the first time after resetting operation has been released, and thus, the initializing operation by this initializing program corresponds to such a process operation which has no longer ended when the operating system and the application program are executed. Namely, this process of the initializing program is not continuously installed in the RAM 105 in order to be communicated with the operating system and the application program.

As previously explained, as works handled by this initializing program, the following defining operations must is carried out: That is, the operation mode (operating frequency, bus width, wait time, interrupt priority degree etc.) of the CPU 102 must be defined; and both the initial setting operations and the operation modes of the peripheral devices (general-purpose timer unit 106, A/D converter 107, D/A converter 108, I/O port 109, DMA controller 110, communication controller 111 etc.) which are connected to the CPU 102 by the internal bus 103 must be defined.

Also, as previously explained, as a concrete method of these operations, these operations may be carried out by writing predetermined values (will be referred to as "initial values" hereinafter) into specific registers which are address-mapped on the internal bus 103 by the CPU 102. The above-described specific registers are not illustrated in Fig. 1, but is illustrated in Fig. 2 as a setting register 203. It is so assumed that these setting registers have been arranged in a distribution manner within the various peripheral devices 106 to 111.

Fig. 2 shows an arrangement of the apparatus of the present invention on the ROM 104 and operations of effects thereof as a block diagram and operating arrows.

The initializing program has been mounted on the ROM 104 by being subdivided into a first area 201 and a second area 202. The first area 201 is constituted by containing an interpret routine which can be directly executed by the CPU 102. The second area 202 is constituted by a data group which cannot be directly executed by the CPU 102, to which the initializing program refers.

In other words, the mounting mode of the initializing program on the ROM 104 is constituted by being subdivided into the first area 201 for storing thereinto instruction codes which can be directly executed by the CPU 102, and the second area 202 for storing thereinto data which cannot be directly executed by the CPU 102. The first area 201 is constituted by containing an interpret routine which sequentially reads out a content of the second area 202 so as to causes the CPU 102 to execute a sequence of an initializing process operation.

Although the second area 202 has been illustrated as a single area in Fig. 2, as previously explained, plural pieces of the second areas 202 may be employed in connection with a total number of peripheral devices, and also, a product variation of an on-vehicle control appliances on which this microcomputer 101 is mounted, namely may be freely set by a user.

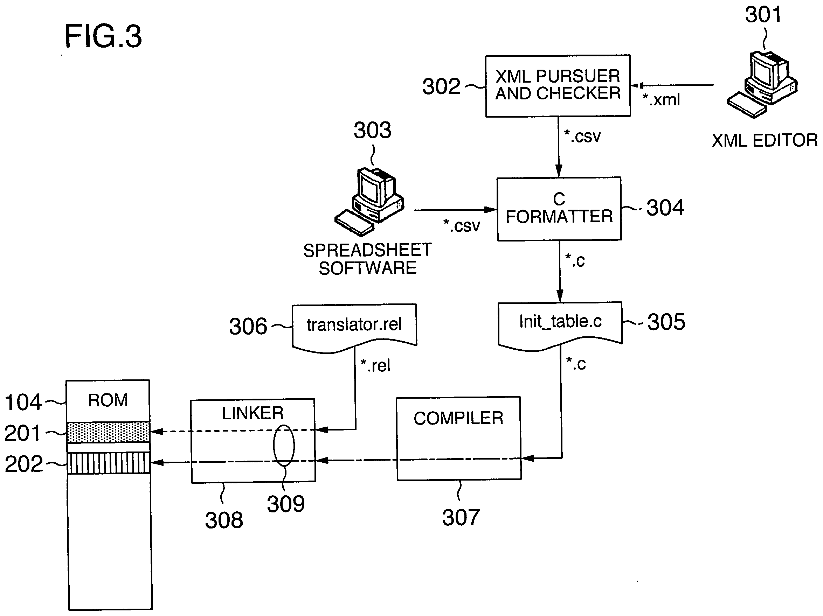

The first area 201 recognizes a location on the ROM 104, where the second area 202 is mounted. This location recognition may be conceived in such a manner that before a program be executed, an address is statistically solved by a linker 308 shown in Fig. 3. Alternatively, the location recognition may be conceived in such a manner that when the first area 201 is called, the location (address) of the second area 202 is instructed in the form of an argument by an upper grade routine which calls this first area 201. It should be noted that this upper grade routine is not illustrated, but may be conceived as a master function to which the function of the first area 201 executed after a resetting operation is released belongs.

An interpret routine to be stored in the first area 201 is formed based upon a general-purpose algorithm described by employing, for instance, the C language, and is constituted by instruction codes which can be directly executed by the CPU 102. The interpret routine of the first area 201 sequentially reads out data from the second are 202 as indicated by a broken arrow line 204 in Fig. 2 so as to execute an initializing operation implied by the read data.

For example, when the general-purpose timer unit 106 corresponding to one of the peripheral devices is initially set, a setting register 203 held by this general-purpose timer unit 106 is recognized by employing a concrete register address attribute defined by the second area 202. Furthermore, since data acquired based upon a concrete initial value attribute similarly defined in the second area 202 is written at an address of this recognized location, a predetermine initializing operation is carried out (indicated broken arrow line 205 in Fig. 2).

Fig. 3 illustratively shows one example as to a forming support mode by an external tool and a flow of process operations in the case that both the first area 201 and the second area 202 are installed in the ROM 104.

The second area 502 has been arranged in the ROM 104 based upon either a table or data having a table format. The data having the table format is given from an external source of the microcomputer by being converted from such a data which is described by the CSV (Comma Separated Value) format, or such a markup language as an XML (Extensible Markup Language).

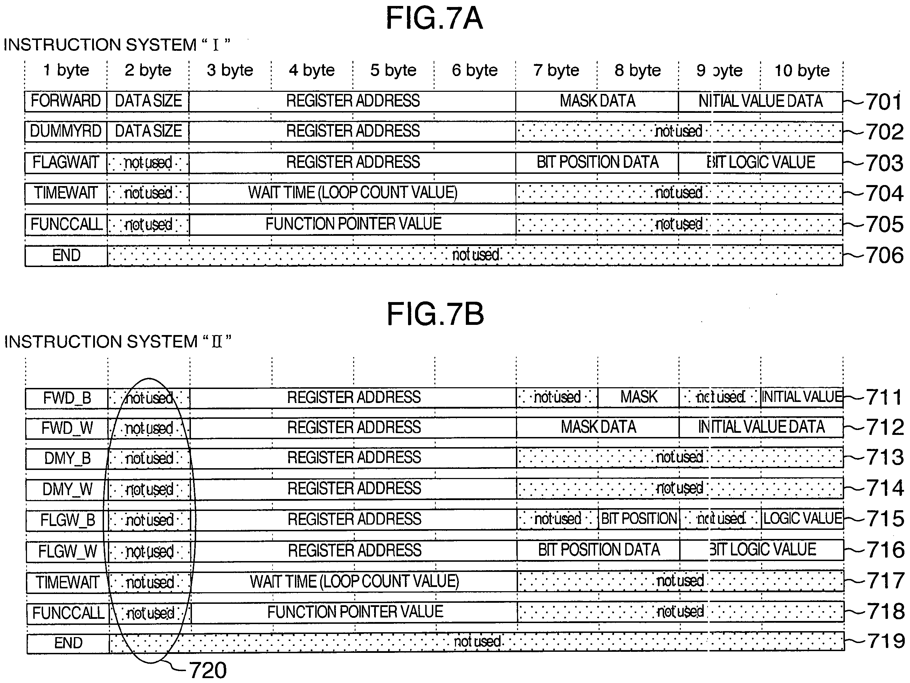

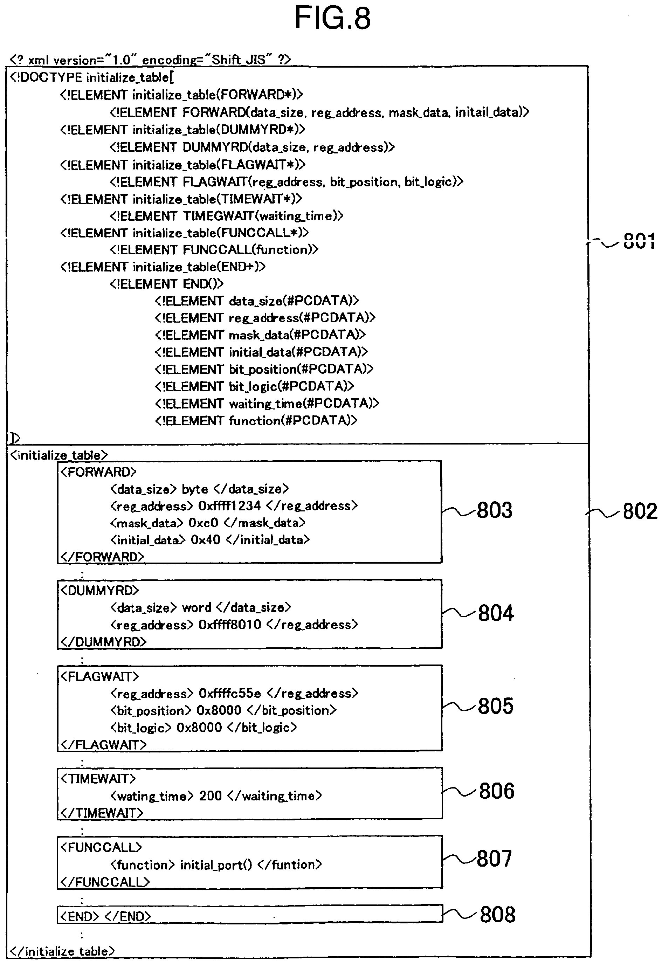

The concrete data setting operation of the second area 202 is performed in accordance with a certain instruction rule (represented in Fig. 7A, Fig. 7B, or Fig. 8) based upon a template formed on spreadsheet software 303, or an XML editor 301 in another manner.

Output data of the spreadsheet software 303 corresponds to *. csv formatted data. On the other hand, output data (having *. xml format) when the data of the second area 202 is set by the XML editor 301 is also converted into *.csv formatted data in such a way that data is cut out in accordance with a checking operation and a tag-attaching rule by an XML purser & checker 302.

These data indicative of the initializing sequences which have been formed in accordance with the two different sorts of methods commonly constitute an input of the subsequent C formatter 304.

In the C formatter 304, these data having the *.csv format are converted in a format of a C language program, for instance, "Init_table.c" 305.

Concretely speaking, the content of this C language program "Init_table.c" 305 is a definition made by the C language of a simple data array given as follows:

```
const char Init_table[][10] = [(0X01, ---0X32, 0X20),
                               (0X02, ---0X78, 0X40),

                                         .

                                         .

                               (0X06, ---0X25, 0X80)];
```

Namely, this content of the C language program "Init_table.c" 305 does not constitute such an instruction having no implication with respect to the CPU 102. However, this data constitutes such an important data indicative of the initializing sequence with respect to the interpret routine of the first area 201.

This C language program "Init table.c" 305 is converted into a relocatable object format (*. rel format), and then this relocatable object format is transferred to a linker 308 in combination with a program object "translator.rel" 306 containing the interpret routine.

This program object "translator.rel" 306 containing the interpret routine owns the same relocatable format, and may use a fixed content unless an instruction set of the microcomputer is not changed. As a consequence, the above-described process operation can contribute an improvement in reliability of the above-explained interpreting operation, eventually an improvement in reliability of the initializing operation.

As a result, the program object "translator.rel" 306 containing the interpret routine is arranged in the first area 201 through the linker 308. Also, the data any "Init_table.c" 305 is processed by a compiler 307, and thereafter, the processed data array is similarly arranged via the linker 308 in the second area 202.

In Fig. 3, a link operation 309 shown in the linker 308 implies that a reference address is statistically solved in such a manner that the first area 201 can correctly find out the second area 202 within the ROM 104.

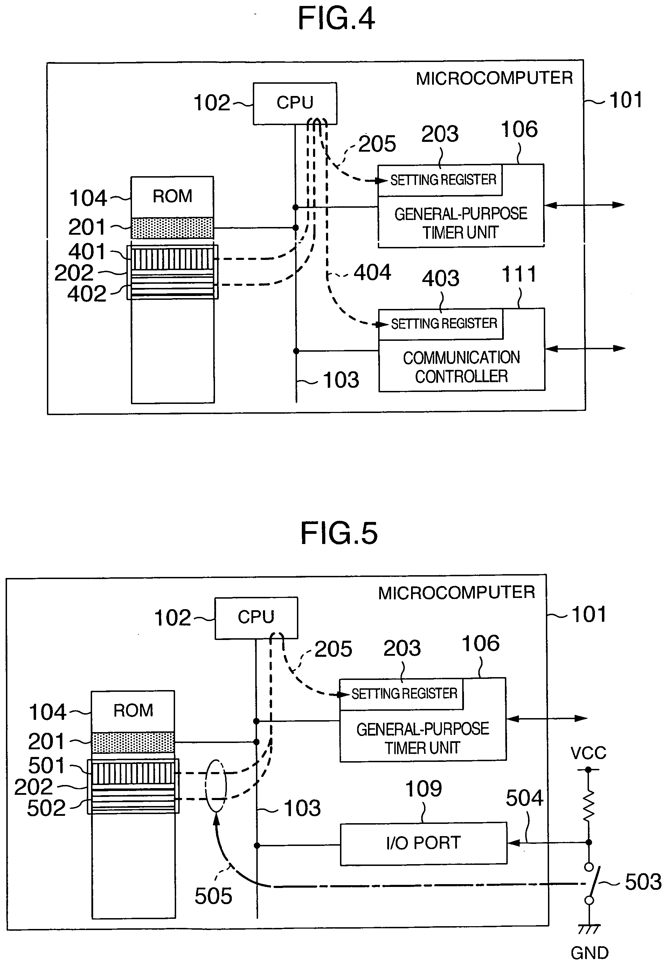

Fig. 4 indicates one embodiment in which a plurality of initializing tables belonging to the second area 202 are provided with respect to each of the peripheral devices. In Fig. 4, a table which handles an initialization of the general-purpose timer unit 106 corresponds to a table 401 belonging to the second area 202, whereas a table which handles an initialization of the communication controller 111 corresponds to a table 401 belonging to the second area 202.

In other words, in the case that the table 401 is interpret-processed, the first area 201 containing the interpret routine initiates the setting register 203 which handles to initiate the general-purpose timer unit 106 in accordance with the definition of this table 401 (indicated by broken arrow 205), whereas in the case that the table 402 is interpret-processed, the first area 201 containing the interpret routine initiates the setting register 403 which handles to initiate the communication controller 111 in accordance with the definition of this table 402 (indicated by broken arrow 404).

As previously explained, normally, it is usual that forming persons of device drivers are different from each other with respect to sorts of peripheral devices. There is a great merit in view of independency of works that initializing operations of individual devices which should be handled by the respective device driver forming persons at their discretion can be divided, and moreover, the respective device drivers can be stored in separate places.

Fig. 5 represents another embodiment related to initializing tables belonging to the second area 202. Different from the above-described embodiment of Fig. 4, in the embodiment of Fig. 5, a plurality of initializing tables 501 and 502 are owned with respect to one peripheral device (in this case, general-purpose timer unit 106) which should be initialized.

While the initializing tables 501 and 502 correspond to tables of initializing definitions, which belong to the second area 202, the first area 201 selects these plural tables in accordance with a logic value (logic input value) 504 of an external switch 503 which is observed via the I/O port 109 (this operation is illustrated in Fig. 5 as dot-and-chain arrow 505).

After the table has been selected, different initializing sequences are executed which are described in such an initializing table (501, or 502) selected similar to the above-described operation in Fig. 2 in order that different initial values are stored in the setting register 203 (this operation is illustrated by broken arrow 205 in Fig. 5).

As a consequence, the initial value which is set to the general-purpose toner unit 106 can be changed based upon the status of the external switch 503 provided outside the microcomputer, and as previously explained, the operation mode can be changed in accordance with the product variation.

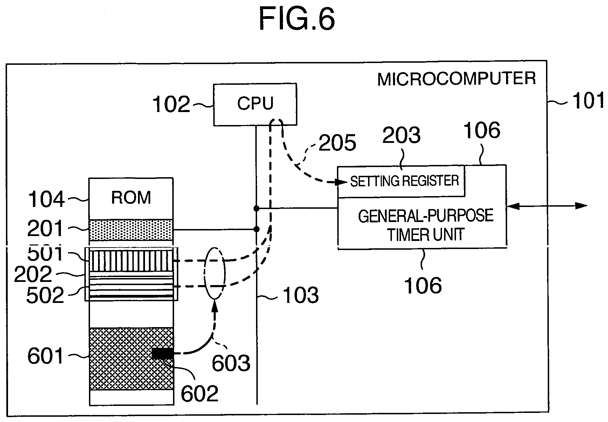

Fig. 6 represents a further embodiment related to initializing tables belonging to the second area 202.

Similar to the embodiment of Fig. 5, in the embodiment of Fig. 6, a plurality of initializing tables 501 and 502 are owned with respect to one peripheral device (in this case, general-purpose timer unit 106) which should be initialized. Similarly, the initializing tables 501 and 502 correspond to tables of initializing definitions, which belong to the second area 202.

In this embodiment, the first area 201 selects these plural tables in accordance with specific user data 602 belonging to a third area 601 on the ROM 104 which corresponds to an application program of the user (this operation is illustrated by dot-and-chain arrow 603 in Fig. 6).

After the table has been selected, different initializing sequences are executed which are described in such an initializing table (501, or 502) selected similar to the above-described operation in Fig. 2 in order that different initial values are stored in the setting register 203 (this operation is illustrated by broken arrow: 205 in Fig. 6).

As a result, even if information is not applied by means of a switch outside the microcomputer, the operation mode of the general-purpose timer unit 106 can be changed by the user data 602 representative of the product variation within the ROM 104.

This means may constitute such an effective means that a switch cannot be additionally provided due to such a reason that a space of the I/O port 109 is small.

Also, the user data 602 may be replaced by such a data formed in accordance with a specific rule capable of interpreting a sort of product variation by the first area 201. Alternatively, as to the user data 602, while an address of either the initializing table 501 or the initializing table 502 is previously selected to be stored in the ROM 104, an initializing table to be processed may be directly instructed with respect to the interpret routine of the first area 201.

In the former case of the data formed based upon the specific rule, the addresses which are arranged in the ROMs 104 of the initializing tables 501 and 502 are internally solved by the first region 201. This case is different from the latter case, and corresponds to the following case: That is, the reference address is statistically solved in advance by borrowing the process operation of the linker 308 shown in Fig. 3, and then, the address information of these plural tables is held in the first area 201. As a result, the table can be selected based upon the user data 602.

Fig. 7A and Fig. 7B indicate instruction formats of data which are stored in the second area 202. Apparently, these instructions have no relationship with the instruction set of the CPU 102, but have meanings only as to the interpret routine contained in the first area 201. In other words, these instruction formats may be determined based upon easy degrees of operations with respect to the setting register (indicated as 203 and 403 in Fig. 4) of the peripheral drivers.

In Fig. 7A and Fig. 7B, an instruction system "I" indicated by instructions 701 to 706, and another instruction system "II" indicated by instructions 711 to 719 are represented as to the instruction formats. However, these two instruction systems, "I" and "II" do not imply that any one of these instruction systems is superiority in view of functions thereof, but are merely described in order to exemplify a variation example of the instruction systems. As a consequence, any one of these instruction systems, may be alternatively employed in an actual execution.

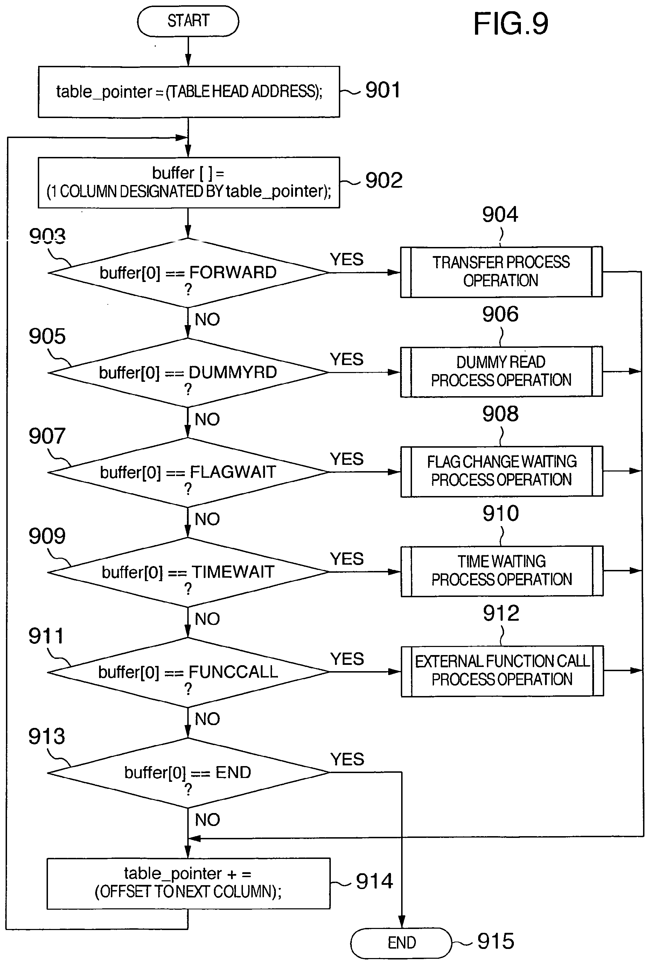

It should be noted that Fig. 8 where an instruction system is described by an XML language, and Fig. 9 where a concrete operation of the interpret routine is indicated by way of a flow chart have been described based upon the instruction system "I" (instructions 701 to 706) shown in Fig. 7A as a precondition.

The data to be set to the second area 202 is constituted by either a table or data having a table format, and the respective data indicated in Fig. 7A and Fig. 7B constitute instruction data having a fixed length (namely, 10 bytes in this case).

Furthermore, referring to Fig. 7A and Fig. 7B, a sort of each instruction is indicated by a first byte thereof, and as to attributes which are required for the respective instructions, such a rule for taking an offset having a fixed byte from a head of each instruction is indicated.

As a consequence, the interpret routine contained in the first area 201 can simply execute such an operation for sequentially tracing the respective instructions, and also, an operation for deriving attributes contained in the individual instructions by employing an address reference instruction attached with an offset.

Also, since the second area 202 is described by repeating the above-explained fixed instructions plural times, the entire second area 202 has been described by either the table or the data having the table format.

An instruction "FORWARD" 702 of the instruction system I corresponds to an instruction which embodies a data transfer instruction, and holds 4 attributes in the own instruction, while these 4 attributes are at least a predetermined address, a predetermined data size, a predetermined bit mask value, and an initial value related to a specific storage area designated by these attributes.

Among these attributes, the predetermined data size may be included in an operation code (op-code) of such a head of "FORWARD", and the data size may be alternatively accepted by increasing the sort of operation codes. This alternative case may be embodied by an instruction "FWD_B" 712 and another instruction "FWD_W" 712 of the instruction system II.

The former instruction constitutes an initial value transfer instruction with respect to a setting register of a byte size, and the latter instruction constitutes an initial value transfer instruction with respect to a setting register of a word size.

An instruction "DUMMYRD" 702 of the instruction system I holds at least two attributes within the own instruction, while these attributes are a predetermined address and a predetermined data size.

Similar to the above-described instruction "FORWARD" 701, among these attributes, the predetermined data size may be included in an operation code (op-code) of such a head of "DUMMYRD", and the data size may be alternatively accepted by increasing the sort of operation codes. This alternative case may be embodied by an instruction "DYM_B" 713 and another instruction "DMY_W" 714 of the instruction system II.

The former instruction constitutes a dummy read instruction with respect to a setting register of a byte size, and the latter instruction constitutes a dummy read instruction with respect to a setting register of a word size.

An instruction "FLAGWAIT" 703 of the instruction system I holds at least three attributes within the own instruction, while these attributes are a predetermined address, a predetermined bit position, and a predetermined logic value.

This instruction "FLAGWAIT" 703 does not hold an attribute of a data size within the own instruction.

This reason is given as follows: That is, the flag waiting operation of this microcomputer 101 according to one embodiment of the present invention may be limited to a word size. However, when another microcomputer is employed, in the case that a data size of a flag check is variable, this information may be included in an attribute.

In this case, as employed as the instruction "FORWARD" 701 and the instruction "DUMMYRD" 702, the attribute as to the data size may be alternatively stored in 2 bytes from a head of an instruction (note that in 703 of Fig. 7A, 2 bytes from head indicate unused area as "not used").

Also, since information as to the attribute of this data size is included in an operation code of such a head "FLAGWAIT", the attribute of the data size may be accepted by increasing the sort of operation codes, which is the same as the above-explained instruction "FORWARD" 701 and the instruction "DUMMYRD" 702. This alternative case may be embodied by an instruction "FLGW_B" 715 and another instruction "FLGW_W" 716 of the instruction system II.

The former instruction becomes a flag change waiting instruction with respect to the setting register of the byte size, and the latter instruction becomes a flag change waiting instruction with respect to the setting register of the word size.

In the instruction system II of Fig. 7B, an unused area 720 of "not used" has been necessarily set after an operation code of a first byte.

This is to consider such a fact that attribute storage areas of register addresses of the instructions 711 to 716 necessarily start from even numbered addresses of a word boundary, and follows a rule of a memory alignment of the CPU 102. As a consequence, the area 720 merely corresponds to a padding on a memory.

Instructions "TIMEWAIT" 704 and 717 have held at least attributes of predetermined waiting times. As to these instructions, the same formats have been employed in the instruction system "I" and the instruction system "II".

Instructions "FUNCCALL" 705 and 718 have held at least attributes of pointers to a predetermined function. As to these instructions, the same formats have been employed in the instruction system "I" and the instruction system "II", which is the same as the above-explained instructions "TIMEWAIT" 704 and 717.

Instructions "END" 706 and 719 are such instructions made by embodying an interpret end instruction, and there is no attribute held by only an operation code. As to these instructions, the same formats have been employed in the instruction system "I" and the instruction system "II", which are the same as the above-explained instructions "TIMEWAIT" 704 and 717, and instructions "FUNCCALL" 705 and 718.

As previously explained, an initializing sequence expressed by a combination of these instructions is formed by employing the template on the spreadsheet software (illustrated as 303 in Fig. 3) by a program designer at a program developing stage.

Fig. 8 shows an example of the instruction system "I" shown in Fig. 7A which is expressed by employing the XML language.

As explained above, this is formed by employing an XML editor (illustrated as 301 in Fig. 3) by the program designer at the developing stage.

In the drawing, a document type definition 801 is called as DTD (Document Type Definition), and defines a structure of an XML document, while the structure corresponds to elements handled by a subsequent XML instance 802, an order of appearing of these elements, a total number of these elements, and attributes of the respective elements. A simple structure check is executed by an XML pursuer & checker (illustrated as 302 in Fig. 3) in accordance with this definition information.

As a consequence, different from the above-explained method for immediately describing the instruction system "I" of Fig. 7A, the check can be previously performed by way of the above-explained spreadsheet software (illustrated as 303 in Fig. 3), so that there is a small number of manual designing rework due to a setting failure.

Also, even if both the document of the instruction rule (for example, Fig. 7A and Fig. 7B), and the actually set data document based upon this instruction rule are not managed, since the implication and the actual data can be written in a parallel manner on the same document, there is such an advantage that the management and the program porting to another microcomputer can be simplified.

The XML instance 802 is a portion of actual data which defines the actual initializing sequence.

A tag attaching structure 803 corresponds to the instruction "FORWORD" 701. Similarly, a tag attaching structure 804 corresponds to the instruction "DUMMYRD" 702; a tag attaching structure 805 corresponds to the structure "FLAGWAIT" 703; a tag attaching structure 806 corresponds to the instruction "TIMEWAIT" 704; a tag attaching structure 807 corresponds to the instruction "FUNCCALL" 705; and a tag attaching structure 808 corresponds to the structure "END" 706.

As previously explained, these tag attaching structure data are properly repeated to be described, so that the initializing sequence is formed.

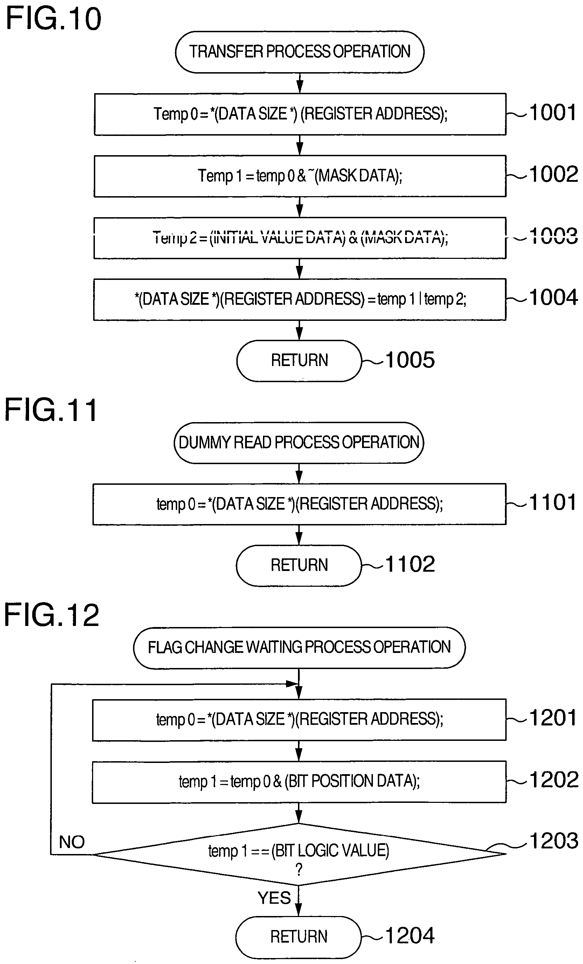

Fig. 9 is a flow chart for describing operations as to the interpret routine contained in the first area 201. Fig. 9 represents flows of the entire interpreting operation, and also, discloses such a flow chart that interpretation of instructions is mainly focused. As a consequence, detailed operations of the respective instructions as shown in Fig. 7A will be described in flow charts for explaining the respective instruction types shown in Fig. 10 to Fig. 14.

A first explanation is made of the flows of the entire operations in the processing sequence.

In a process 901, the table head address of the second area 202 is set to a local variable "table_pointer". As previously described, the above-explained table head address may be statistically solved by previously performing the process operation of the linker (indicated as 308 in Fig. 3) so as to be held in the first area 201. Alternatively, when the interpret routine is called, the table head address may be given from the upper grade master function in the form of the argument.

In the subsequent process 902, data for one line of instructions pointed by the above-explained "table_pointer" is acquired to a read buffer "buffer []". Since this process operation is performed, in judging process operations (903, 905, 907, 909, 911, and 913) which will be subsequently executed, instructions can be judged, and the process operations to the individual process operations can be branched.

In a judging step 903, the head byte "buffer [0]" of the read buffer is analyzed in order to check as to whether or not the head byte is made coincident with the data transfer instruction "FORWARD". If the head buffer is coincident with the data transfer instruction, then the process operation is branched to a transfer process 904, and after a series of transfer process operation is accomplished, the process operation is advanced to a process 914. On the other hand, if the head byte is not coincident with the data transfer instruction, then the process operation is subsequently advanced to a judging step 905.

In a judging step 905, the head byte "buffer [0]" of the read buffer is similarly analyzed in order to check as to whether or not this head byte is made coincident with the dummy read instruction "DUMMYRD". If the head byte is coincident with the dummy read instruction, then the process operation is branched to a dummy read process 906, and after a series of process operation is accomplished, the process operation is advanced to a process 914. On the other hand, if the head byte is not coincident with the dummy read instruction, then the process operation is subsequently advanced to a judging step 907.

In a judging step 907, the head byte "buffer [0]" of the read buffer is similarly analyzed in order to check as to whether or not this head byte is made coincident with the flag change waiting instruction "FLAGWAIT". If the head byte is coincident with the flag change waiting instruction, then the process operation is branched to a flag change waiting process 908, and after a series of process operation is accomplished, the process operation is advanced to a process 914. On the other hand, if the head byte is not coincident with the flag change waiting instruction, then the process operation is subsequently advanced to a judging step 909.

In a judging step 909, the head byte "buffer [0]" of the read buffer is similarly analyzed in order to check as to whether or not this head byte is made coincident with the time waiting instruction "TIMEWAIT". If the head byte is coincident with the time waiting instruction, then the process operation is branched to a time waiting process 910, and after a series of process operation is accomplished, the process operation is advanced to the process 914. On the other hand, if the head byte is not coincident with the time waiting instruction, then the process operation is subsequently advanced to a judging step 911.

In a judging step 911, the head byte "buffer [0]" of the read buffer is similarly analyzed in order to check as to whether or not this head byte is made coincident with the external function call instruction "FUNCCALL". If the head byte is coincident with the external function call instruction, then the process operation is branched to an external function call process 912, and after a series of process operation is accomplished, the process operation is advanced to the process 914. On the other hand, if the head byte is not coincident with the external function call instruction, then the process operation is subsequently advanced to a judging step 913.

In a judging step 913, the head byte "buffer [0]" of the read buffer is similarly analyzed in order to check as to whether or not this head byte is made coincident with the interpret process end instruction "END". If the head byte is coincident with the interpret process end instruction, then the process operation is branched to a process 915, and after the interpret process operation is accomplished, the process operation is returned to the original process. On the other hand, if the head byte is not coincident with the interpret process end instruction, then the process operation is subsequently advanced to the process 914.

In the process 914, an offset portion (address increased portion) is added to the content of the local variable "table_pointer" in order to prepare reading of the next instruction step. That is to say, this offset portion corresponds to 10 bytes in the instruction system I of Fig. 7A, or the instruction system II of Fig. 7B.

Thereafter, the process operation is advanced to the process 902 in which the above-explained series of processes 902 to 914 are again repeated. In other words, the sequential operation is repeatedly carried out in accordance with the above-described flow operations until the interpret process end instruction "END".

The transfer process 904, the dummy read process 906, the flag change waiting process 908, the time waiting process 910, and the external function call process 912 shown in Fig. 9 correspond to the coupled process operations with respect to the relevant instruction, and may be mounted even by a subroutine. The contents of these process operations will be described separately based upon flow charts of Fig. 10 to Fig. 14.

As indicated in Fig. 7A and Fig. 7B, in the below-mentioned separate instructions, attributes such as data sizes, register address, and initial value data are required. However, as represented in the above-explained process 902, these attributes have already been stored in the read buffer "buffer []". Also, apparently, the read buffer "buffer []" corresponds to an array, and therefore, if an attribute value is read out from a predetermined array element, then an attribute value may be derived. As a consequence, the process for deriving this attribute value is omitted in the flow charts of Fig. 10 to Fig. 14, and is not illustrated.

Fig. 10 shows a flow chart as to data transfer process operations.

In a process 1001, data is read based upon an address indicated by an attribute of a register address, while considering an attribute of a data size, and the read data is set to a local variable "temp 0". In other words, the original content of the setting register is set to the local variable "temp 0".

In a process 1002, the local variable "temp 0" is AND-gated with a complement of 1 of the mask data, and then, the AND-gated result is set to another local variable "temp 1". In other words, the content of the local variable "temp 1" is arranged by that a bit which will be set by the instruction is "0", and the remaining bits are arranged by the original bit pattern of the setting register.

In a process 1003, the initial value data is AND-gated by the mask data, and the AND-gated result is set to a local variable "temp 2". In other words, the content of the local variable "temp 2" is arranged by that a bit which will be set by the instruction is equal to the content of the initial value data, and all of the remaining bits are constructed of "0".

In a process 1004, the local variable "temp 1" is AND-gated with the local variable "temp 2", and then, the resultant data is rewritten in the setting register by considering the data size.

As a consequence, the content is arranged by that a bit which will be set by this instruction is equal to the initial value data, and the remaining bits are constituted by the original bit pattern of the setting register. Subsequently, in a process 1005, the process operations of this flow chart are accomplished, and are returned to the calling source.

Since the above-explained process operations are carried out, either the arbitrary bit width designated by the mask data, or the initial value in the bit pattern can be transferred, which can be applied to data setting operations as to various sorts of microcomputers.

Fig. 11 is a flow chart for explaining the dummy read process operations.

In a process 1101, data is read based upon an address indicated by an attribute of a register address by considering an attribute of a data size, and then, the read data is set to the local variable "temp 0".

As a consequence, the dummy reading operation of the setting register indicated by the attribute of the register address is completed.

The content of the local variable is not used in the subsequent process, but is discarded in a process 1102. Then, the process operation is returned to the calling source.

Fig. 12 is a flow chart for explaining the flag change waiting process operations.

In a process 1201, data is read based upon an address indicated by an attribute of a register address by considering an attribute of a data size, and then, the read data is set to the local variable "temp 0". In other words, the content of the setting register is set to the local variable "temp 0".

In a process 1202, the content of the local variable "temp 0" is AND-gated with the bit position data, and then the AND-gated result is stored in the local variable "temp 1". In other words, the content of the local variable "temp 1" is arranged by that a bit which will be tested by this instruction corresponds to the bit pattern originated from the setting register, and all of the remaining bits are constructed of "0".

Subsequently, in a judging step 1203, the content of the local variable "temp 1" is identified with the attribute of the bit logic value data.

When this content of the local variable is made coincident with the attribute of the bit logic value data, the process operation is advanced to a process 1204, and then, this process operation is accomplished and is returned to the calling source. When this content of the local variable is not made coincident with the attribute of the bit logic value data, the process operation is again returned to the process 1201, in which a waiting operation is carried out while the content of the relevant setting register is checked until the judging step 1203 can be established.

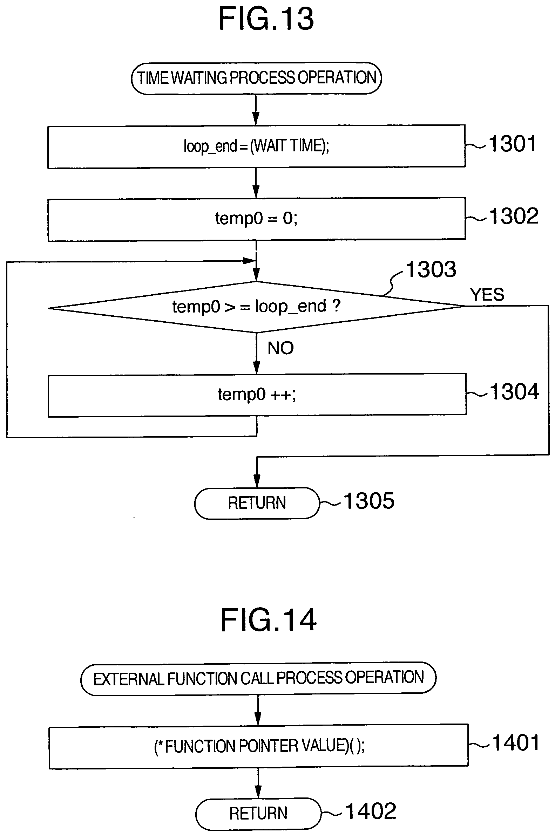

Fig. 13 is a flow chart for indicating the time waiting process operations.

In a process 1301, in an actual case, a loop number (will be explained later) is set to a local variable "loop_end" as an attribute of a waiting time.

In a process 1302, a loop counter is initialized to "0" for preparing that the local variable "temp 0" is used as this loop counter.

In a judging step 1303, the content of the local variable "temp 0" is compared with the content of the local variable "loop_end". If "temp 0" $\geq$ "loop_end", then the process operation is advanced to a process 1303, and then is returned to the calling source, so that the waiting operation is ended.

If "temp 0" < "loop_end", then the content of the local variable "temp 0" corresponding to the loop counter is incremented by "1" in a process 1304, and then, the process operation is returned to the judging step 1301 in which a loop operation is carried out.

This loop operation is to realize such a waiting time equal to the loop number, while a summation of program running times in the judging step 1303 and the process 1304 is used as time resolution.

Fig. 14 is a flow chart for representing the external function call processing operations.

In a process 1401, an attribute of a given function pointer value is called as a function so as to call an external function. After the process operation is returned from this function the external a function call processing operations are accomplished in a process 1402, and the process operation is returned to the calling source.

Effects of this embodiment will now be summarized. As apparent from the above explanations, in accordance with the microcomputer 101 of this embodiment, the CPU 102 initiates the operating system after the resetting operation is released, and can complete the initialization before the application program runs. The initialization is basically carried out by that the CPU 102 writes the specific value in the specific register.

In the case that such an initializing program is described by employing, for example, the C language, instruction codes after a compiler are converted into such instructions that a data transfer instruction is mainly used. This is compiled as a repetition of an instruction stream which is transferred to such an initial setting-purpose register that an immediate data value is loaded on a CPU register, and thereafter, this immediate data is a target. In other words, since the initializing purpose data values are stored in the form of the operation codes of the instruction codes, it is normal that such instruction codes in which instructions and data are mixed with each other as a group are finally produced.

The initializing apparatus (namely, initializing program) of the microcomputer according to the present invention is not realized by that the instructions and the data are stored in the ROM in the mixture form, but is featured as follows: This initializing program is arranged by being subdivided into the first area 201 and at least one, or more pieces of the second areas 202. The first area 201 stores thereinto the instruction codes which can be directly executed by the CPU 102. The second area 202 stores thereinto the data which cannot be directly executed by the CPU 102.

As to the first area 201, the role containing the interpret execution routine for performing the initializing sequence is given based upon the data content of the second area 202. The second area 202 owns such a data structure which is arranged based upon a certain rule in order to be capable of being searched by the first area 201.

Moreover, this rule can be independently set irrespective of the instruction system of the CPU 201, and therefore, does not depend upon architecture of a specific microcomputer, and can be easily formed and managed by an external tool.

Also, both the first area 201 and at least one, or more pieces of the second regions 202 are arranged in such a form made by being merged with the user application program in the ROM 104 within the microcomputer 101. As a result, the exclusively-used initiation ROM is no longer required in the microcomputer 101, so that an increase in the cost can be suppressed.

Furthermore, the second areas 202 may be alternatively provided at plural places. That is to say, a specific second area may be provided for the general-purpose timer unit 106, whereas another second area may be provided for the communication controller 111, namely may be formed for the initializing use purposes in a separate manner. If an initialization of an individual peripheral device is required, then the second area 202 corresponding thereto may be selected, and the interpret routine of the first area 201 may be executed.

As a consequence, it is no longer required that the initializing routines of the respective peripheral devices in a post stage of a software developing operation, and further, independent characteristics as to the initializing program developing works among the respective device driver developers, and also as to the unit testing and verification work of the device driver can be secured. Conversely speaking, this feature implies that the mutual dependent characteristic among the respective device driver developers is not present, and therefore, the program developing term can be shortened by the parallel developing works of the plural device drivers, and the parallel verification works thereof.

Furthermore, as another utilizing method of the above-explained system, a plurality of second areas 202 (namely, plurality of different initializing tables) with respect to one peripheral device may be owned. In other words, in correspondence with a product variation, an initializing sequence by an individual second area is selected to be executed, so that operation modes of peripheral devices for each of the products may be changed.

An initializing sequence defined in the second area 202 is specified to the sort of the relevant microcomputer, and in such a case that while the instruction set of the CPU 102 is not changed, only structures of internal devices employed in the same series of microcomputer, only the data of this second area 202 may be changed.

Also, when a large change is required in such a way that the instruction set of the CPU 102 is changed, a re-compiling operation of the interpret routine stored in the first area 201 is required. However, since the interpret routine stored in the first area 201 is formed based upon the general-purpose algorithm described by the C language, the functions can be simply ported by way of, for example, re-compiling operation by a C compiler. As a result, porting of the initializing program, and the maintenance thereof can become superior, as compared with those of the conventional technique.

As a consequence, the shared data table is no longer provided which has stored the variable definitions as to the plural sorts of microcomputers, but also such a condition that although the data table itself is huge, only the limited area thereof is utilized never occur. Accordingly, there is no possibility that the memory efficiency of the ROM is lowered.

In addition, as previously explained, if only the variable definitions (addresses) of the hardware are solved, then no consideration is made with respect to such a change in setting values that which values are set to the variables.

As previously explained, when the sort of the microcomputer is changed, the variable definitions (address) of the hardware are changed, and the implications of the setting values thereof are changed. Since the second area 202 is provided, both the variable definitions (addresses) of the hardware and the values which should be set thereto are separated from the normal program, and thus, the variable definitions can be easily changed.

Since the second area 202 can be set by the user, when a sort of microcomputer is changed, an initial setting operation thereof may be changed. Conversely speaking, this indicates that the first area 201 need not be changed by the program forming person thereof.

Such an operation that the first area 201 which interprets the second area 202 so as to perform the actual initializing operation implies that while the reliability as to the interpreting operation is held at constant, the initializing apparatus can be freely utilized in a plurality of product models.

As previously explained, generally speaking, unless the instruction set of the CPU 102 is changed, the content of the first area 201 is no longer changed. As a consequence, with respect to the same series of microcomputer in which the instruction set of the CPU 102 is not changed, the first area 201 is made fixed and the reliability of operations can be secured.

Also, the initializing apparatus of the present invention may alternatively accept the following requirement: That is, in accordance with logic input values of ports which are inputted outside a microcomputer, predetermined combinations (initializing tables) of data belonging to the second area 202 are selectively changed, so that although the same microcomputers are employed, initializing operations thereof are wanted to be changed in response to a change in destination places of microcomputers-assembled products. For instance, the below-mentioned setting operation is available, by which in one destination place, a communication controller among peripheral devices of this microcomputer is used, whereas in another destination place, such a communication controller is not used.

In other words, at such a timing when the initializing apparatus assembled in the microcomputer 101 is initiated, the process sequence containing the interpret routine installed in the first area 201 reads the external port of the microcomputer 101, and selects the reading combination from the second area 201 based upon the pattern of this logic value.

As a result, while the initializing program is not changed, the initializing operation can be changed outside the microcomputer, which may accept the change in the product variations.

Alternatively, a predetermined combination may be selected from the combinations belonging to the second area 202, depending upon the data content of the third area 601 defined within the ROM 104. As a result, the selecting operation may be carried out in the close condition within the ROM 104 without being communicated with the external unit for the microcomputer, which may give a merit in such a case that there is a small number of empty external ports.

In other words, at such a timing when the initializing apparatus assembled in the microcomputer 101, the process sequence containing the interpret routine installed in the first area 201 reads the data content of the third area 601 which is different from the first and second areas stored in the ROM 104, and selects a read combination from the second area 202 in accordance with the read data content.

As this third area 601, such a specific area is supposed which belongs to an application program of a user which is changed for every destination place of products. As a consequence, as previously explained, in order that the process sequence containing the interpret program for the initializing operation and stored in the first area 201 is fixed without changing the content thereof, this first area 201 is desirably defined based upon the fixed addresses.

As a result, while the initializing program is not still changed, the initializing operation can be changed from the external unit, which may accept the change in the above-explained product variation.

The data structure of the second area 202 is realized in either the list form or the data having the table format, so that the respective steps of the initializing sequence may be formed in correspondence with the respective columns of the list, or the table, which may expect an improvement in productivity and readable characteristic with respect to the forming person of the initializing program. Also, since the data structure is employed, the data may be essentially read by way of a machine. As a consequence, when the initializing sequence is formed and is handled for maintenance purpose, these forming/maintenance operations may be supported by an external tool, so that the developing efficiency and the maintenance efficiency may be improved.

In the case that the data structure of the second area 202 is formed in either the list formatter the table format, either the CSV format or such a markup language as the XML language may be employed which has the superior reading characteristic with respect to the program forming person. The initializing sequence described in either the CSV format or the markup language is converted by the external tool to become the data structure (either list or table) of the second area 202.

In a data structure having either a list format or a table format, a rule for determining that respective elements express what items is defined as a separate document, and both the rule document and a document made of actual setting values must be managed in a pair. However, when the data structure is formed in either the CSV format or the markup language, both the rule for determining that the respective elements express what items and the actual setting values can be expressed in the structural form in a single document. Also, when the rule is changed, the conventional document may be easily changed into a new rule by using the external tool. As a result, there is such a merit that the data structure of the second area 202 can be simply formed and kept in the maintenance.

In this embodiment, among the respective columns of either the list or the table, namely among the functions which should be expressed as the instruction unit, while one of the necessary columns (functions) is used as a means, this means contains 4 attributes, and represents a data transfer of a predetermined bit width related to a storage area designated by these 4 attributes. These 4 attributes corresponds to at least a predetermined address, a predetermined data size, a predetermined bit mask value, and an initial value related by this specific storage area.

It is apparent that the essential point of the initializing operation is given by that the specific initializing data is set with respect to the specific register, and both the address information and the information as to the initial value are necessarily required. In addition, in order to accept the initializing operations for the various sorts of microcomputers, if 4 sets of the following attributes in total are present, then the data transfer operations for initializing various sorts of microcomputers can be expressed in a general purpose manner. These 4 attributes correspond to information as to a data size indicative of a multiple value of 8 bits such as a byte/word, and mask information for designating that an initial value is transferred to which bit range of the relevant area.

It is important that these attributes are stored in accordance with a predetermined offset address from either a predetermined column or a head of each column based upon such a rule capable of being searched by the interpret routine of the first area 201. Based upon this rule, the interpret routine of the first area 201 executes to correctly refer to the attributes, and also, the maintenance and the management of this data structure can be easily carried out by the external tool.

Among the respective columns of either the list or the table, namely among the functions which should be expressed as the instruction unit, while one of the necessary columns (functions) is used as a means, this means contains 2 attributes, and represents a dummy read related to a storage area designated the these 2 attributes. These 2 attributes correspond to at least a predetermined address, and a predetermined data size.

Depending upon a sort of microcomputers, there is such a microcomputer that an initial value cannot be set unless an initializing purpose register must be dummy-read. In particular, among status registers which store interrupt flags, in order to quarantee that a program correctly recognizes an interrupt flag (namely, interrupt factor), there are many status registers that this interrupt flag cannot be clear after a dummy read. This corresponds to one embodiment as to a hand shake operation in order to prevent a dropout of information between this status register and the CPU when the information is received/transmitted.

Also, as to a data size of a dummy read operation, if the read operation is not carried out in correspondence with the data size of the relevant register, namely, a multiple value of 8 bits such a byte/word, then such a microcomputer which does not correctly recognize a dummy read is present. As a consequence, this data size attribute is also the necessary items.

As apparent from the foregoing description, if the dummy read function is provided as one function of the initializing operation, then the initializing operations for all sorts of microcomputers can be expressed in a general purpose manner.

It is also important that these attributes are stored in accordance with a predetermined offset address from either a predetermined column or a head of each column based upon such a rule capable of being searched by the interpret routine of the first area 201.

Among the respective columns of either the list or the table, namely among the functions which should be expressed as the instruction unit, while one of the necessary columns (functions) is used as a means, this means contains 3 attributes, and expresses the waiting operation until the relevant bit of the storage area designated by these 3 attributes becomes a predetermined logic value. These 3 attributes correspond to at least a predetermined address, a predetermined data size, and a predetermined logic value.

As an initializing operation method, there is such a use field that until a certain event occurs, a progress of an initializing program is wanted to be stopped for a waiting operation. In particular, there are many possibilities that this request is produced with respect to a general-purpose timer unit of a peripheral device. Among these use fields, there is such a use field that with respect to a device for outputting a pulse by an output compare, a predetermined logic output is defined as an initial value to be outputted before an application program runs. This implies that within the initializing program, a compare match for an immediately near time is produced and an output is defined.

Since the interpret routine for executing the sequence of initializing process is employed in the CPU, operations with respect to a complex general-purpose timer unit are available. If a sequence at this time is described in detail, then a logic value is given which is wanted to be outputted as the initial value to the output register, and also, a small value is set to a compare match register in such a manner that an immediately near compare match is produced (it is so assumed that free-run timer to be compared with compare match register has been cleared to become zero after resetting is released).

Thereafter, a time comparing operation of the general-purpose timer unit is commenced. The below-mentioned assumption is made: That is, after the timer has started the timer operation, the above-described free-run timer increases its time count value for predetermined time resolution, and when the time count value of the free-run timer becomes equal to the value of the compare match register, the set value of the output register is outputted to the port. Furthermore, it is so assumed that a compare match flag for indicating that the compare match occurs is set to the status register.

Thereafter, if the flag waiting function is employed, then the status register is monitored in the initializing program, and the waiting operation can be carried out until this compare match flag is set.

Furthermore, such a sequential operation can be realized in which this compare match flag is cleared, and an interrupt factor is cleared in order not to accept an unnecessary interrupt after an initializing operation has been carried out (it is so assumed that after interrupt prohibit is released, if this compare match flag has been set, then interrupt operation is accepted. Also, it is assumed that above-described dummy read function is included in this function).

As apparent from the foregoing description, if the waiting function until the specific flag is changed as one function of the initializing operation, then the initializing operations for all sorts of microcomputers can be expressed in a general purpose manner.

It is also important that these attributes are stored in accordance with a predetermined offset address from either a predetermined column or a head of each column based upon such a rule capable of being searched by the interpret routine of the first area 201.

Among the respective columns of either the list or the table, namely among the functions which should be expressed as the instruction unit, while one of the necessary columns (functions) is used as a means, this means includes at least an attribute of a predetermined waiting time, and represents the waiting operation of the time designated by this attribute.

Depending upon sorts of peripheral devices, when an initializing operation is carried out, there are some peripheral devices which require predetermined very short waiting times. In particular, this requirement may possibly occur as to a general-purpose timer unit having an internal clock source independent from a CPU, and a communication controller.

That is, within a time period from an initiation of such a peripheral device until an oscillating operation of an internal clock becomes stable, the normal initializing operation cannot be carried out, and thus, a waiting time is required.

Since the interpret routine for executing the sequence of initializing process is employed in the CPU, the initializing sequence is temporarily stopped in order that the above-explained waiting time may be satisfied, and thus, the initializing operation can be carried out under normal condition.

As apparent from the foregoing description, if the time waiting operation function is provided as one function of the initializing operation, then the initializing operations for all sorts of microcomputers can be expressed in a general purpose manner.

It is also important that these attributes are stored in accordance with a predetermined offset address from either a predetermined column or a head of each column based upon such a rule capable of being searched by the interpret routine of the first area 201.

Among the respective columns of either the list or the table, namely among the functions which should be expressed as the instruction unit, while one of the necessary columns (functions) is used as a means, this means contains at least an attribute of a pointer to a predetermined function, and represents a function call to such a function designated by this attribute.

Depending upon sorts of peripheral devices, when an initializing operation is carried out, there are some peripheral devices in which a logic value of an external output thereof becomes unstable. Normally a service function for prohibiting/permitting this external output is installed in an application program with respect to such a peripheral device.

This installation reason is given as follows: That is, the output prohibiting/permitting service after a reset releasing operation until the application program is initiated is so assumed that an initializing program takes its responsibility, whereas the application program takes the responsibility of the content prohibiting/permitting service from the control stop until the power supply is cut off. As a consequence, such a service function is normally installed in the application program.

As a consequence, such an operation is required that the external output is prohibited by the above function during the initializing operation, and the external output is permitted by the above function after the initializing operation.

An actual item of this function corresponds to a writing instruction of a predetermined logic value with respect to a specific external output port, and an external circuit which receives this logic value output performs to prohibit outputting of the device output value, or to permit outputting of the device output value. However, the position of this output prohibiting/permitting-purpose external port is such an information which is not known by the initializing program.

This reason is given as follows: That is, an initializing sequence is determined based upon a sort of a microcomputer to be used, whereas the position of the external port is determined based upon a condition of a circuit externally provided with this microcomputer. As a consequence, there are some possibilities that even when the same initializing programs are employed, the positions of the initializing ports are different from each other under a condition of hardware.

As a consequence, the interpret routine for executing the sequence of initializing process is employed in the CPU in order that the differences of these externally provided circuits may be absorbed and the independent characteristics of the initializing programs may be secured. The above-described "function call to function designated by this attribute" concretely speaking implies that the above-explained output prohibiting/permitting-purpose application function is called.

Since the interpret routine for executing the sequence of initializing process is employed in the CPU, the external application function can be called when the initializing operation is carried out, and the complex operation can be carried out.

As apparent from the foregoing description, if the external function calling function is provided as one function of the initializing operation, then the initializing operations for all sorts of microcomputers can be expressed in a general purpose manner, while the difference in the external provided circuits is included.

It is also important that these attributes are stored in accordance with a predetermined offset address from either a predetermined column or a head of each column based upon such a rule capable of being searched by the interpret routine of the first area 201.

Among the respective columns of either the list or the table, namely among the functions which should be expressed as the instruction unit, while one of the necessary columns (functions) is used as a means, this means contains such an attribute which implies at least an end of a series of initializing process operations, and expresses an end of an interpret execution by the interpret routine contained in the first area 201.

An initializing sequence of a microcomputer corresponds to such a program that respective columns of either a list or a table is expressed as 1 step of an instruction. As a consequence, such an expression which implies an end of a series of process operations is necessarily required.

Based upon this expression, the initializing-purpose interpret routine stored in the first area 201 returns the control operation thereof to the upper grade function so as to accomplish a series of process operations. Furthermore, the master function to which the process operation has been returned subsequently institutes the operating system by establishing such an initial condition that the initializing process operation is completely ended and the platform has been completed, and can pass the process operation to an application program defined by a user.

Also, it is important that this end attribute is stored in accordance with a predetermined offset address from either a predetermined column or a head of each column based upon such a rule capable of being searched by the interpret routine of the first area 201.

In on-vehicle control apparatuses, process operations which should be performed as initializing operations are limited to some extent, and contents of these process operations involve only a small number of necessities which should be handled by application forming persons. As a result, since the microcomputer according to this embodiment is assembled in an on-vehicle control apparatus, the sequential operation thereof can be defined within the second area 202 in a concentration manner, which may give a large utility merit with respect to the program forming person.

Also, since higher reliability is required for operations of on-vehicle control apparatus, as to initializing operations thereof, firm operations fitted to designing policy are similarly required.

As a consequence, in accordance with the present invention recited in the claims, the operation reliability having a certain level can be guaranteed with respect to users who use the on-vehicle control apparatuses.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the scope of the appended claims.

**Claims**

1. An initializing apparatus of a microcomputer (101) equipped with a CPU (102) and a ROM (104) for storing thereinto a program executed by said CPU (102), in which while an initializing program is executed after a model sort of the microcomputer has been changed and a reset signal of the sort-changed microcomputer (101) is released and before an operating system is initiated, said initializing program causes the CPU (102) to execute a process operation for setting a structure of the CPU itself and an operation mode of the CPU (102), or a process operation for setting a structure and an operation mode of a peripheral device connected via a bus (103) to the CPU (102); wherein:

   said initializing program is separated into a first area (201) on the ROM (104)
   and at least one, or more pieces of second areas (202) on the ROM (104) said
   first area (201) stores thereinto an instruction code which can be directly executed by said CPU (102) in the sort-changed microcomputer (101); said second area (202) stores thereinto data which cannot be directly executed by said CPU (102) in the sort-changed microcomputer (101); and said first area (201) containing an interpret routine which sequentially reads out the content of said second area (202) and which causes said CPU (102) to
   execute a sequence of the initializing process operation.

2. An initializing apparatus of a microcomputer as claimed in claim 1 wherein:

   said second area (202) is arranged in such a manner that a user can modify the content of said second area (202).

3. An initializing apparatus of a microcomputer as claimed in claim 1 or 2 wherein:

   said first area (201) comprises a function for selecting a predetermined combination from data belonging to said second area (202) in accordance with a logic input value of a port, which is inputted outside the microcomputer (101).

4. An initializing apparatus of a microcomputer as claimed in at least one of the preceding claims wherein:

   said first area (201) has a function for selecting a predetermined combination from data belonging to said second area (202) in accordance with a data content of a third area (601) which is different from both the first area (201) and
   the second area (202) and has been stored in said ROM (104).

5. An initializing apparatus of a microcomputer as claimed in at least one of the preceding claims wherein:

   said second area (202) is arranged by either a list or data having a table format in said ROM (104).

6. An initializing apparatus of a microcomputer as claimed in claim 5 wherein:

   said second area (202) is arranged by either the list or the data having the table format in said ROM (104); and
   said data is applied from being converted from such a data which is supplied outside said microcomputer (101), and is described in a CSV format, or a markup language format such as an XML.

7. An initializing apparatus of a microcomputer as claimed in claim 5 or 6 wherein:

while said second area (202) is arranged by either the list or the table formatted data within said ROM (104), said second area contains at least 4 attributes as one element of the operation sequence expressed by said data, said 4 attributes corresponding to a predetermined address, a predetermined data size, a predetermined bit mask value, and an initial value related to a specific storage area designated by these attributes; said second area (202) expresses a data transfer operation having a predetermined bit width related to the storage area designated by said attributes; and said attributes are stored based upon a rule which can be searched by an interpret routine of said first area (201) in accordance with a predetermined offset address from either a predetermined row or a head of each of columns.

8. An initializing apparatus of a microcomputer as claimed in claim 5 or 6 wherein:

while said second area (202) is arranged by either the list or the table formatted data within said ROM (104), said second area contains at least 2 attributes as one element of the operation sequence expressed by said data, said 2 attributes corresponding to a predetermined address, and a predetermined data size; said second area (202) expresses a dummy read related to the storage area designated by said attributes; and said attributes are stored based upon a rule which can be searched by an interpret routine of said first area (201) in accordance with a predetermined offset address from either a predetermined row or a head of each of columns.

9. An initializing apparatus of a microcomputer as claimed in at least one of claims 5-8 wherein:

while said second area (202) is arranged by either the list or the table formatted data within said ROM (104), said second area contains at least 3 attributes as one element of the operation sequence expressed by said data, said 3 attributes corresponding to a predetermined address, a predetermined bit position, and a predetermined logic value; said second area (202) expresses a waiting operation until a relevant bit of a storage area designated by said 3 attributes becomes a predetermined logic value; and said attributes are stored based upon a rule which can be searched by an interpret routine of said first area (201) in accordance with a predetermined offset address from either a predetermined row or a head of each of columns.

10. An initializing apparatus of a microcomputer as claimed in at least one of claims 5-9 wherein:

while said second area (202) is arranged by either the list or the table formatted data within said ROM (104), said second area contains at least an attribute of a predetermined waiting time as one element of the operation sequence expressed by said data, said second area (202) expresses a waiting operation of a time designated by said attribute; and said attribute is stored based upon a rule which can be searched by an interpret routine of said first area (201) in accordance with a predetermined offset address from either a predetermined row or a head of each of columns.

11. An initializing apparatus of a microcomputer as claimed in claim 5 or 6 wherein:

while said second area (202) is arranged by either the list or the table formatted data within said ROM (104), said second area contains at least an attribute of a pointer to a predetermined function as one element of the operation sequence expressed by said data, said second area (202) expresses a function call to a function designated by said attribute; and said attribute is stored based upon a rule which can be searched by an interpret routine of said first area (201) in accordance with a predetermined offset address from either a predetermined row or a head of each of columns.

12. An initializing apparatus of a microcomputer as claimed in claim 5 or 6 wherein:

while said second area (202) is arranged by either the list or the table formatted data within said ROM (104), said second area contains at least an attribute as one element of the operation sequence expressed by said data, said a attribute implies an end of an initializing process operation; said second area (202) expresses an end of an interpret execution by said first area (201); and said attribute is stored based upon a rule which can be searched by an interpret routine of said first area (201) in accordance with a predetermined offset address from either a predetermined row or a head of each of columns.

13. An initializing program executed by a microcomputer (101) equipped with a CPU (102) and a ROM (104) for storing thereinto a program executed by said CPU (102), in which while said initializing program is executed after a model sort of the microcomputer has been changed and a reset signal of the sort-changed microcomputer (101) is released and before an operating system is initiated, said initializing program causes the CPU (102) to execute a process operation for setting a structure of the CPU itself and an operation mode of the CPU (102), or a process operation for setting a structure and an operation mode of a peripheral device connected via a bus (103) to the CPU (102); wherein:

said initializing program is separated into a first area (201) on the ROM (104) and at least one, or more pieces of second areas (202) on the ROM (104) said first area (201) stores thereinto an instruction code which can be directly executed by said CPU (102) in the sort-changed microcomputer (101); said second area (202) stores thereinto data which cannot be directly executed by said CPU (102) in the sort-changed microcomputer (101); and said first area (201) containing an interpret routine which sequentially reads out the content of said second area (202) and which causes said CPU (102) to execute a sequence of the initializing process operation.

**Patentansprüche**

1. Initialisierungsvorrichtung eines Mikrocomputers (101), der mit einer CPU (102) und einem ROM (104), um darin ein Programm zu speichern, das durch die CPU (102) ausgeführt wird, ausgestattet ist und in dem, während ein Initialisierungsprogramm ausgeführt wird, nachdem ein Modelltyp des Mikrocomputers verändert worden ist und ein Zurücksetzungssignal des Mikrocomputers (101), dessen Typ verändert worden ist, ausgegeben wird und bevor ein Betriebssystem initiiert wird, das Initialisierungsprogramm bewirkt, dass die CPU (102) einen Prozessbetrieb zum Einstellen einer Struktur der CPU selbst und einer Betriebsart der CPU (102) oder einen Prozessbetrieb zum Einstellen einer Struktur und einer Betriebsart eines Peripheriegeräts, das über einen Bus (103) mit der CPU (102) verbunden ist, ausführt; wobei
das Initialisierungsprogramm in einen ersten Bereich (201) auf dem ROM (104) und mindestens einen oder mehrere Teile von zweiten Bereichen (202) auf dem ROM (104) aufgeteilt ist, wobei der erste Bereich (201) darin einen Befehlscode speichert, der durch die CPU (102) in dem Mikrocomputer (101), dessen Typ verändert worden ist, direkt ausgeführt werden kann; wobei der zweite Bereich (202) darin Daten speichert, die durch die CPU (102) in dem Mikrocomputer (101), dessen Typ verändert worden ist, nicht direkt ausgeführt werden können; und der erste Bereich (201) eine Interpretationsroutine enthält, die den Inhalt des zweiten Bereichs (202) sequenziell ausliest und bewirkt, dass die CPU (102) eine Sequenz des Initialisierungsvorgangsbetriebs ausführt.

2. Initialisierungsvorrichtung eines Mikrocomputers nach Anspruch 1, wobei der zweite Bereich (202) so ausgelegt ist, dass ein Anwender den Inhalt des zweiten Bereichs (202) ändern kann.

3. Initialisierungsvorrichtung eines Mikrocomputers nach Anspruch 1 oder 2, wobei der erste Bereich (201) eine Funktion zum Auswählen einer vorgegebenen Kombination aus Daten, die gemäß einem Logik-Eingangswert eines Anschlusses, der außerhalb des Mikrocomputers (101) eingegeben wird, zu dem zweiten Bereich (202) gehören, umfasst.

4. Initialisierungsvorrichtung eines Mikrocomputers nach mindestens einem der vorhergehenden Ansprüche, wobei der erste Bereich (201) eine Funktion zum Auswählen einer vorgegebenen Kombination aus Daten, die zu dem zweiten Bereich (202) gehören, gemäß einem Dateninhalt eines dritten Bereichs (601), der sich sowohl von dem ersten Bereich (201) als auch von dem zweiten Bereich (202) unterscheidet und in dem ROM (104) gespeichert worden ist, besitzt.

5. Initialisierungsvorrichtung eines Mikrocomputers nach mindestens einem der vorhergehenden Ansprüche, wobei der zweite Bereich (202) entweder durch eine Liste oder durch Daten, die ein Tabellenformat in dem ROM (104) besitzen, angeordnet ist.

6. Initialisierungsvorrichtung eines Mikrocomputers nach Anspruch 5, wobei
der zweite Bereich (202) entweder durch die Liste oder die Daten, die das Tabellenformat in dem ROM (104) besitzen, angeordnet ist; und die Daten angewendet werden, nachdem sie von solchen Daten, die außerhalb des Mikrocomputers (101) zugeführt werden, konvertiert worden sind, und in einem CSV-Format oder einer Auszeichnungssprache, z. B. einer XML, beschrieben werden.

7. Initialisierungsvorrichtung eines Mikrocomputers nach Anspruch 5 oder 6, wobei
der zweite Bereich (202) entweder durch die Liste oder die tabellenformatierten Daten innerhalb des ROM (104) angeordnet ist, wobei der zweite Bereich mindestens 4 Attribute als ein Element der Betriebssequenz, die durch die Daten ausgedrückt ist, enthält, wobei die 4 Attribute einer vorgegebenen Adresse, einer vorgegebenen Datengröße, einem vorgegebenen Bit-Maskenwert und einem Anfangswert entsprechen, der zu einem spezifischen Speicherbereich zugehörig ist, der durch diese Attribute bestimmt ist; wobei der zweite Bereich (202) einen Datenübertragungsbetrieb ausdrückt, der eine vorgegebene Bitbreite besitzt, die zu dem Speicherbereich zugehörig ist, der durch die Attribute bestimmt ist; und wobei die Attribute anhand einer Regel gespeichert werden, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

8. Initialisierungsvorrichtung eines Mikrocomputers nach Anspruch 5 oder 6, wobei
während der zweite Bereich (202) durch entweder die Liste oder die tabellenformatierten Daten innerhalb des ROM (104) angeordnet ist, der zweite Bereich mindestens 2 Attribute als ein Element der Betriebssequenz, die durch die Daten ausgedrückt ist, enthält, wobei die 2 Attribute einer vorgegebenen Adresse und einer vorgegebenen Datengröße entsprechen; wobei der zweite Bereich (202) ein Dummy-Lesen ausdrückt, das zu dem Speicherbereich zugehörig ist, der durch die Attribute bestimmt ist; und wobei die Attribute anhand einer Regel gespeichert werden, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

9. Initialisierungsvorrichtung eines Mikrocomputers nach mindestens einem der Ansprüche 5-8, wobei
während der zweite Bereich (202) durch entweder die Liste oder die tabellenformatierten Daten innerhalb des ROM (104) angeordnet ist, der zweite Bereich mindestens 3 Attribute als ein Element der Betriebssequenz, die durch die Daten ausgedrückt ist, enthält, wobei die 3 Attribute einer vorgegebenen Adresse, einer vorgegebenen BitPosition und einem vorgegebenen Logik-Wert entsprechen; wobei der zweite Bereich (202) einen Wartebetrieb ausdrückt, bis ein relevantes Bit eines Speicherbereichs, der durch die 3 Attribute bestimmt ist, zu einem vorgegebenen Logikwert wird; und wobei die Attribute anhand einer Regel gespeichert werden, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

10. Initialisierungsvorrichtung eines Mikrocomputers nach mindestens einem der Ansprüche 5-9, wobei
während der zweite Bereich (202) durch entweder die Liste oder die tabellenformatierten Daten innerhalb des ROM (104) angeordnet ist, der zweite Bereich mindestens ein Attribut einer vorgegebenen Wartezeit als ein Element der Betriebssequenz, die durch die Daten ausgedrückt ist, enthält, wobei der zweite Bereich (202) einen Wartebetrieb eines Zeitraums, der durch die Attribute bestimmt ist, ausdrückt; und wobei das Attribut anhand einer Regel gespeichert wird, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

11. Initialisierungsvorrichtung eines Mikrocomputers nach Anspruch 5 oder 6, wobei
während der zweite Bereich (202) durch entweder die Liste oder die tabellenformatierten Daten innerhalb des ROM (104) angeordnet ist, der zweite Bereich mindestens ein Attribut eines Zeigers auf eine vorgegebene Funktion als ein Element der Betriebssequenz, die durch die Daten ausgedrückt ist, enthält, wobei der zweite Bereich (202) einen Funktionsaufruf auf eine Funktion, die durch das Attribut bestimmt ist, ausdrückt; und wobei das Attribut anhand einer Regel gespeichert wird, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

12. Initialisierungsvorrichtung eines Mikrocomputers nach Anspruch 5 oder 6, wobei
während der zweite Bereich (202) durch entweder die Liste oder die tabellenformatierten Daten innerhalb des ROM (104) angeordnet ist, wobei der zweite Bereich mindestens ein Attribut als ein Element der Betriebssequenz, die durch die Daten ausgedrückt ist, enthält, wobei ein Attribut ein Ende eines Initialisierungsvorgangsbetriebs beinhaltet; wobei der zweite Bereich (202) ein Ende einer Interpretationsausführung durch den ersten Bereich (201) ausdrückt; und wobei das Attribut anhand einer Regel gespeichert wird, die durch eine Interpretationsroutine des ersten Bereichs (201) gemäß einer vorgegebenen Versatzadresse aus entweder einer vorgegebenen Reihe oder einem Kopf jeder Spalte gesucht werden kann.

13. Initialisierungsprogramm, das durch einen Mikrocomputer (101) ausgeführt wird, der mit einer CPU (102) und einem ROM (104), um darin ein Programm zu speichern, das durch die CPU (102) ausgeführt wird, ausgestattet ist und in dem während ein Initialisierungsprogramm ausgeführt wird, nachdem ein Modelltyp des Mikrocomputers verändert worden ist und ein Zurücksetzungssignal des Mikrocomputers (101), dessen Typ verändert worden ist, ausgegeben wird und bevor ein Betriebssystem initiiert wird, das Initialisierungsprogramm bewirkt, dass die CPU (102) einen Prozessbetrieb zum Einstellen einer Struktur der CPU selbst und einer Betriebsart der CPU (102) oder einen Prozessbetrieb zum Einstellen einer Struktur und einer Betriebsart eines Peripheriegeräts, das über einen Bus (103) mit der CPU (102) verbunden ist, ausführt; wobei

das Initialisierungsprogramm in einen ersten Bereich (201) auf dem ROM (104) und mindestens einen oder mehrere Teile von zweiten Bereichen (202) auf dem ROM (104) aufgeteilt ist, wobei der erste Bereich (201) darin einen Befehlscode speichert, der durch die CPU (102) in dem Mikrocomputer (101), dessen Top verändert worden ist, direkt ausgeführt werden kann; wobei der zweite Bereich (202) darin Daten speichert, die durch die CPU (102) in dem Mikrocomputer (101), dessen Typ verändert worden ist, nicht direkt ausgeführt werden können; und der erste Bereich (201) eine Interpretationsroutine enthält, das den Inhalt des zweiten Bereichs (202) sequenziell ausliest und bewirkt, dass die CPU (102) eine Sequenz des Initialisierungsvorgangsbetriebs ausführt.

## Revendications

1. Appareil d'initialisation d'un microordinateur (101) équipé d'une unité centrale de traitement, CPU, (102) et d'une mémoire morte, ROM, (104) pour stocker dans celle-ci un programme exécuté par ladite CPU (102), dans lequel pendant qu'un programme d'initialisation est exécuté après qu'un type de modèle du microordinateur a été modifié et qu'un signal de réinitialisation du microordinateur (101) dont le type a été modifié est émis et avant qu'un système d'exploitation ne soit initié, ledit programme d'initialisation amène la CPU (102) à exécuter une opération de traitement pour régler une structure de la CPU elle-même et un mode de fonctionnement de la CPU (102), ou une opération de traitement pour régler une structure et un mode de fonctionnement d'un dispositif périphérique connecté par l'intermédiaire d'un bus (103) à la CPU (102) ; dans lequel :

   ledit programme d'initialisation est séparé en une première zone (201) sur la ROM (104) et en au moins un ou plusieurs éléments de secondes zones (202) sur la ROM (104), ladite première zone (201) stocke dans celle-ci un code d'instruction qui peut être directement exécuté par ladite CPU (102) dans le microordinateur (101) dont le type a été modifié ; ladite seconde zone (202) stocke dans celle-ci des données qui ne peuvent pas être directement exécutées par ladite CPU (102) dans le microordinateur (101) dont le type a été modifié ; et ladite première zone (201) contenant une routine d'interprétation qui lit séquentiellement le contenu de ladite seconde zone (202) et qui amène ladite CPU (102) à exécuter une séquence de l'opération de traitement d'initialisation.

2. Appareil d'initialisation d'un microordinateur selon la revendication 1, dans lequel :

   ladite seconde zone (202) est agencée d'une manière telle qu'un utilisateur peut modifier le contenu de ladite seconde zone (202).

3. Appareil d'initialisation d'un microordinateur selon la revendication 1 ou 2, dans lequel :

   ladite première zone (201) comprend une fonction pour sélectionner une combinaison prédéterminée à partir de données appartenant à ladite seconde zone (202) selon une valeur d'entrée logique d'un port, qui est entrée à l'extérieur du microordinateur (101).

4. Appareil d'initialisation d'un microordinateur selon au moins l'une des revendications précédentes, dans lequel :

   ladite première zone (201) possède une fonction pour sélectionner une combinaison prédéterminée à partir de données appartenant à ladite seconde zone (202) selon un contenu de données d'une troisième zone (601) qui est différente à la fois de la première zone (201) et de la seconde zone (202) et a été stockée dans ladite ROM (104).

5. Appareil d'initialisation d'un microordinateur selon au moins l'une des revendications précédentes, dans lequel :

   ladite seconde zone (202) est agencée par soit une liste soit des données ayant un format de tableau dans ladite ROM (104).

6. Appareil d'initialisation d'un microordinateur selon la revendication 5, dans lequel :

   ladite seconde zone (202) est agencée par soit la liste soit les données ayant le format de tableau dans ladite ROM (104) ; et lesdites données sont appliquées en étant converties à partir de telles données qui sont fournies à l'extérieur dudit microordinateur (101), et sont décrites dans un format CSV, ou un format de langage de balisage tel que XML.

7. Appareil d'initialisation d'un microordinateur selon la revendication 5 ou 6, dans lequel :

pendant que ladite seconde zone (202) est agencée par soit la liste soit les données formatées en tableau à l'intérieur de ladite ROM (104), ladite seconde zone contient au moins 4 attributs en tant qu'élément de la séquence d'opération exprimée par lesdites données, lesdits 4 attributs correspondant à une adresse prédéterminée, une taille de données prédéterminée, une valeur de masque de bits prédéterminée et une valeur initiale associée à une zone de stockage spécifique désignée par ces attributs ; ladite seconde zone (202) exprime une opération de transfert de données ayant une largeur de bits prédéterminée associée à la zone de stockage désignée par lesdits attributs ; et lesdits attributs sont stockés sur la base d'une règle qui peut être recherchée par une routine d'interprétation de ladite première zone (201) selon une adresse de décalage prédéterminée à partir soit d'une rangée prédéterminée soit d'un titre de chacune des colonnes.

8. Appareil d'initialisation d'un microordinateur selon la revendication 5 ou 6, dans lequel :

pendant que ladite seconde zone (202) est agencée par soit la liste soit les données formatées en tableau à l'intérieur de ladite ROM (104), ladite seconde zone contient au moins 2 attributs en tant qu'élément de la séquence d'opération exprimée par lesdites données, lesdits 2 attributs correspondant à une adresse prédéterminée et une taille de données prédéterminée ; ladite seconde zone (202) exprime une lecture fictive associée à la zone de stockage désignée par lesdits attributs ; et lesdits attributs sont stockés sur la base d'une règle qui peut être recherchée par une routine d'interprétation de la première zone (201) selon une adresse de décalage prédéterminée à partir soit d'une rangée prédéterminée soit d'un titre de chacune des colonnes.

9. Appareil d'initialisation d'un microordinateur selon au moins l'une des revendications 5 à 8, dans lequel :

pendant que ladite seconde zone (202) est agencée par soit la liste soit les données formatées en tableau à l'intérieur de ladite ROM (104), ladite seconde zone contient au moins 3 attributs en tant qu'élément de la séquence d'opération exprimée par lesdites données, lesdits 3 attributs correspondant à une adresse prédéterminée, un emplacement de bits prédéterminé et une valeur logique prédéterminée ; ladite seconde zone (202) exprime une opération d'attente jusqu'à ce qu'un bit pertinent d'une zone de stockage désignée par lesdits 3 attributs devienne une valeur logique prédéterminée ; et lesdits attributs sont stockés sur la base d'une règle qui peut être recherchée par une routine d'interprétation de ladite première zone (201) selon une adresse de décalage prédéterminée à partir soit d'une rangée prédéterminée soit d'un titre de chacune des colonnes.

10. Appareil d'initialisation d'un microordinateur selon au moins l'une des revendications 5 à 9, dans lequel :

pendant que ladite seconde zone (202) est agencée par soit la liste soit les données formatées en tableau à l'intérieur de ladite ROM (104), ladite seconde zone contient au moins un attribut d'un temps d'attente prédéterminé en tant qu'élément de la séquence d'opération exprimée par lesdites données, ladite seconde zone (102) exprime une opération d'attente d'un temps désigné par ledit attribut ; et ledit attribut est stocké sur la base d'une règle qui peut être recherchée par une routine d'interprétation de ladite première zone (201) selon une adresse de décalage prédéterminée à partir soit d'une rangée prédéterminée soit d'un titre de chacune des colonnes.

11. Appareil d'initialisation d'un microordinateur selon la revendication 5 ou 6, dans lequel :

pendant que ladite seconde zone (202) est agencée par soit la liste soit les données formatées en tableau à l'intérieur de ladite ROM (104), ladite seconde zone contient au moins un attribut d'un pointeur vers une fonction prédéterminée en tant qu'élément de la séquence d'opération exprimée par lesdites données, ladite seconde zone (202) exprime un appel de fonction à une fonction désignée par ledit attribut ; et ledit attribut est stocké sur la base d'une règle qui peut être recherchée par une routine d'interprétation de ladite première zone (201) selon une adresse de décalage prédéterminée à partir soit d'une rangée prédéterminée soit d'un titre de chacune des colonnes.

12. Appareil d'initialisation d'un microordinateur selon la revendication 5 ou 6, dans lequel :

pendant que ladite seconde zone (202) est agencée par soit la liste soit les données formatées en tableau à l'intérieur de ladite ROM (104), ladite seconde zone contient au moins un attribut en tant qu'élément de la séquence d'opération exprimée par lesdites données, ledit attribut implique une fin d'une opération de traitement d'initialisation ; ladite seconde zone (202) exprime une fin d'une exécution d'interprétation par ladite première zone (201) ; et ledit attribut est stocké sur la base d'une règle qui peut être recherchée par une routine d'interprétation de ladite première zone (201) selon une adresse de décalage prédéterminée à partir soit d'une rangée prédéterminée soit d'un titre de chacune des colonnes.

13. Programme d'initialisation exécuté par un microordinateur (101) équipé d'une CPU (102) et d'une ROM (104) pour stocker dans celle-ci un programme exécuté par ladite CPU (102), dans lequel pendant que ledit programme d'initialisation est exécuté après qu'un type de modèle du microordinateur a été modifié et qu'un signal de réinitialisation du microordinateur (101) dont le type a été modifié est émis et avant qu'un système d'exploitation ne soit initié, ledit programme d'initialisation amène la CPU (102) à exécuter une opération de traitement pour régler une structure de la CPU elle-même et un mode de fonctionnement de la CPU (102), ou une opération de traitement pour régler une structure et un mode de fonctionnement d'un dispositif périphérique connecté par l'intermédiaire d'un bus (103) à la CPU (102) ; dans lequel :

ledit programme d'initialisation est séparé en une première zone (201) sur la ROM (104) et en au moins un ou plusieurs éléments de secondes zones (202) sur la ROM (104), ladite première zone (201) stocke dans celle-ci un code d'instruction qui peut être directement exécuté par ladite CPU (102) dans le microordinateur (101) dont le type a été modifié ; ladite seconde zone (202) stocke dans celle-ci des données qui ne peuvent pas être directement exécutées par ladite CPU (102) dans le microordinateur (101) dont le type a été modifié ; et ladite première zone (201) contenant une routine d'interprétation qui lit séquentiellement le contenu de ladite seconde zone (202) et qui amène ladite CPU (102) à exécuter une séquence de l'opération de traitement d'initialisation.

# FIG.1

MICROCOMPUTER 101

CPU ~ 102

103 ~

104
ROM

RAM
105

GENERAL-PURPOSE TIMER UNIT ~ 106

A/D CONVERTER ~ 107

D/A CONVERTER ~ 108

I/O PORT ~ 109

DMA CONTROLLER ~ 110

COMMUNICATION CONTROLLER ~ 111

# FIG.2

MICROCOMPUTER ~ 101

102 ~ CPU

204 ~

205

203

SETTING REGISTER

104 ~ ROM

201 ~

202 ~

GENERAL-PURPOSE TIMER UNIT

106

~ 103

# FIG.3

EP 1 808 765 B1

## FIG.4

## FIG.5

# FIG.6

# FIG.7A

INSTRUCTION SYSTEM " I "

| 1 byte | 2 byte | 3 byte | 4 byte | 5 byte | 6 byte | 7 byte | 8 byte | 9 byte | 10 byte | |
|---|---|---|---|---|---|---|---|---|---|---|
| FORWARD | DATA SIZE | REGISTER ADDRESS | | | | MASK DATA | | INITIAL VALUE DATA | | ~701 |
| DUMMYRD | DATA SIZE | REGISTER ADDRESS | | | | not used | | | | ~702 |
| FLAGWAIT | not used | REGISTER ADDRESS | | | | BIT POSITION DATA | | BIT LOGIC VALUE | | ~703 |
| TIMEWAIT | not used | WAIT TIME (LOOP COUNT VALUE) | | | | not used | | | | ~704 |
| FUNCCALL | not used | FUNCTION POINTER VALUE | | | | not used | | | | ~705 |
| END | not used | | | | | | | | | ~706 |

# FIG.7B

INSTRUCTION SYSTEM " II "

| | | | | | | | | |
|---|---|---|---|---|---|---|---|---|
| FWD_B | not used | REGISTER ADDRESS | not used | MASK | not used | INITIAL VALUE | ~711 |
| FWD_W | not used | REGISTER ADDRESS | MASK DATA | INITIAL VALUE DATA | | | ~712 |
| DMY_B | not used | REGISTER ADDRESS | not used | | | | ~713 |
| DMY_W | not used | REGISTER ADDRESS | not used | | | | ~714 |
| FLGW_B | not used | REGISTER ADDRESS | not used | BIT POSITION | not used | LOGIC VALUE | ~715 |
| FLGW_W | not used | REGISTER ADDRESS | BIT POSITION DATA | BIT LOGIC VALUE | | | ~716 |
| TIMEWAIT | not used | WAIT TIME (LOOP COUNT VALUE) | not used | | | | ~717 |
| FUNCCALL | not used | FUNCTION POINTER VALUE | not used | | | | ~718 |
| END | not used | | | | | | ~719 |

~720

EP 1 808 765 B1

# FIG.8

```
<? xml version="1.0" encoding="Shift_JIS" ?>
<!DOCTYPE initialize_table[
        <!ELEMENT initialize_table(FORWARD*)>
                <!ELEMENT FORWARD(data_size, reg_address, mask_data, initail_data)>
        <!ELEMENT initialize_table(DUMMYRD*)>
                <!ELEMENT DUMMYRD(data_size, reg_address)>
        <!ELEMENT initialize_table(FLAGWAIT*)>
                <!ELEMENT FLAGWAIT(reg_address, bit_position, bit_logic)>
        <!ELEMENT initialize_table(TIMEWAIT*)>
                <!ELEMENT TIMEGWAIT(waiting_time)>
        <!ELEMENT initialize_table(FUNCCALL*)>
                <!ELEMENT FUNCCALL(function)>
        <!ELEMENT initialize_table(END+)>
                <!ELEMENT END()>
                        <!ELEMENT data_size(#PCDATA)>
                        <!ELEMENT reg_address(#PCDATA)>
                        <!ELEMENT mask_data(#PCDATA)>
                        <!ELEMENT initial_data(#PCDATA)>
                        <!ELEMENT bit_position(#PCDATA)>
                        <!ELEMENT bit_logic(#PCDATA)>
                        <!ELEMENT waiting_time(#PCDATA)>
                        <!ELEMENT function(#PCDATA)>
]>
```
~ 801

```
<initialize_table>
        <FORWARD>
                <data_size> byte </data_size>
                <reg_address> 0xffff1234 </reg_address>
                <mask_data> 0xc0 </mask_data>
                <initial_data> 0x40 </initial_data>
        </FORWARD>
                :
        <DUMMYRD>
                <data_size> word </data_size>
                <reg_address> 0xffff8010 </reg_address>
        </DUMMYRD>
                :
        <FLAGWAIT>
                <reg_address> 0xffffc55e </reg_address>
                <bit_position> 0x8000 </bit_position>
                <bit_logic> 0x8000 </bit_logic>
        </FLAGWAIT>
                :
        <TIMEWAIT>
                <wating_time> 200 </waiting_time>
        </TIMEWAIT>
                :
        <FUNCCALL>
                <function> initial_port() </funtion>
        </FUNCCALL>
                :
        <END> </END>
                :
</initialize_table>
```
~ 803  
~ 804  
~ 805  
~ 806  
~ 807  
~ 808  
~ 802

FIG.9

START

table_pointer = (TABLE HEAD ADDRESS); — 901

buffer [ ] =
(1 COLUMN DESIGNATED BY table_pointer); — 902

903

buffer[0] == FORWARD ? — YES → TRANSFER PROCESS OPERATION — 904

NO

905

buffer[0] == DUMMYRD ? — YES → DUMMY READ PROCESS OPERATION — 906

NO

907

buffer[0] == FLAGWAIT ? — YES → FLAG CHANGE WAITING PROCESS OPERATION — 908

NO

909

buffer[0] == TIMEWAIT ? — YES → TIME WAITING PROCESS OPERATION — 910

NO

911

buffer[0] == FUNCCALL ? — YES → EXTERNAL FUNCTION CALL PROCESS OPERATION — 912

NO

913

buffer[0] == END ? — YES

NO

table_pointer + =
(OFFSET TO NEXT COLUMN); — 914

END — 915

# FIG.10

TRANSFER PROCESS OPERATION

Temp 0 = *(DATA SIZE *) (REGISTER ADDRESS); ～1001

Temp 1 = temp 0 & ~(MASK DATA); ～1002

Temp 2 = (INITIAL VALUE DATA) & (MASK DATA); ～1003

*(DATA SIZE *)(REGISTER ADDRESS) = temp 1 | temp 2; ～1004

RETURN ～1005

# FIG.11

DUMMY READ PROCESS OPERATION

temp 0 = *(DATA SIZE *)(REGISTER ADDRESS); ～1101

RETURN ～1102

# FIG.12

FLAG CHANGE WAITING PROCESS OPERATION

temp 0 = *(DATA SIZE *)(REGISTER ADDRESS); ～1201

temp 1 = temp 0 & (BIT POSITION DATA); ～1202

NO — temp 1 == (BIT LOGIC VALUE) ? ～1203

YES

RETURN ～1204

# FIG.13

```
TIME WAITING PROCESS OPERATION
            │
            ▼
   loop_end = (WAIT TIME);          ~1301
            │
            ▼
      temp0 = 0;                     ~1302
            │
            ▼
    ┌───────────────────┐
    │  temp0 > = loop_end ?  ───── YES
    └───────────────────┘   1303
            │ NO
            ▼
      temp0 ++;                      ~1304
            │
            ▼
       RETURN                        ~1305
```

# FIG.14

```
EXTERNAL FUNCTION CALL PROCESS OPERATION
            │
            ▼
  (* FUNCTION POINTER VALUE)( );     ~1401
            │
            ▼
       RETURN                        ~1402
```

**EP 1 808 765 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003308307 A
- JP 2004362448 A
- US 20040236934 A1